# EUROPEAN PATENT APPLICATION

(11) **EP 4 496 168 A1**
(43) Date of publication of application: **22.01.2025**
(21) Application number: 22964731.8
(22) Date of filing: 08.11.2022
(51) Int. Cl.: H02J 7/00, H01M 10/658, H01M 50/227

(54) **HEAT-RESISTANT PROTECTIVE MEMBER AND BATTERY**

(71) Applicant: Contemporary Amperex Technology Co., Limited, Ningde, Fujian 352100 (CN); Gong Yi Van-Research Innovation Composite Material Co., Ltd, Zhengzhou, Henan 451261 (CN)
(72) Inventor: JIN, Haizu, Ningde, Fujian 352100 (CN); YU, Qiyong, Ningde, Fujian 352100 (CN); ZHANG, Jicheng, Ningde, Fujian 352100 (CN); LIU, Xizong, Ningde, Fujian 352100 (CN); LV, Duojun, Ningde, Fujian 352100 (CN); NIU, Shaojun, Ningde, Fujian 352100 (CN); XU, Endong, Ningde, Fujian 352100 (CN); XIAO, Zhiwei, Ningde, Fujian 352100 (CN); LI, Ting, Ningde, Fujian 352100 (CN); LI, Jing, Ningde, Fujian 352100 (CN); LU, Jiajie, Ningde, Fujian 352100 (CN)
(74) Representative: Ziebig Hengelhaupt Intellectual Property Attorneys Patentanwaltskanzlei PartGmbB
(86) International application number: PCT/CN2022/130662
(87) International publication number: WO 2024/098256

(57) **Abstract**

This application discloses a heat-resistant protective member and a battery. The heat-resistant protective member includes a functional layer, and the functional layer includes a first resin and a filler dispersed in the first resin. In this way, the thermal shock when a battery cell is ignited and exploded can be resisted, and the structural integrity can still be maintained without being broken under the thermal shock, thereby providing effective heat insulation and protection for a battery pack.

## Description

### TECHNICAL FIELD

This application relates to the field of battery technologies, and in particular, to a heat-resistant protective member and a battery.

### BACKGROUND

With increasing application of a battery technology in daily life, safety performance of a battery has also attracted more attention. The essence of a battery safety issue is closely related to thermal runaway. When the battery is thermally runaway, safety of an entire vehicle and personal safety of people in the vehicle may be endangered.

### SUMMARY

An objective of this application is to provide a heat-resistant protective member and a battery. The heat-resistant protective member can protect a battery box from airflow impact and high-temperature melting generated during thermal runaway of the battery, thereby reinforcing safety performance of the battery.

In order to solve the above technical problems, one technical solution adopted in this application is to provide a heat-resistant protective member, the heat-resistant protective member includes a functional layer, and the functional layer includes a first resin and a filler dispersed in the first resin.

In one embodiment of this application, a mass content of a carbon element in the first resin is greater than 40%. The filler is a chopped fiber, a volume proportion of the chopped fiber in the functional layer is 50% to 80%, and the chopped fiber includes one or more of a carbon fiber, a silicon carbide fiber, a silicon nitride fiber, a quartz fiber, an aluminum silicate fiber, an asbestos fiber, a high silica fiber, a boro-carbon fiber, and a carbon nanotube. Alternatively, the filler is a first heat-reflective filler, a volume proportion of the first heat-reflective filler in the functional layer is 45% to 75%, and the first heat-reflective filler includes one or more of oxides or nitrides of titanium, iron, aluminum, zinc, lanthanum, and cerium.

In one embodiment of this application, a mass content of a carbon element in the first resin is greater than 40%, the filler includes a first silicon-containing filler, and a weight ratio of the first resin to the first silicon-containing filler is 1:3 to 1: 1.

In an embodiment of this application, the first silicon-containing filler includes one or a combination of more of silica aerogel powder, quartz powder, mica powder, ceramic micro powder, white carbon black, wollastonite, montmorillonite, and talcum powder.

In an embodiment of this application, the first silicon-containing filler includes silica aerogel powder and mica powder, and a mass ratio of the silica aerogel powder to the mica powder is 1:3 to 1: 1.

In an embodiment of this application, the first silicon-containing filler includes silicon dioxide and aluminum oxide; and a dosage of the silicon dioxide is 50-80 wt% of the first silicon-containing filler, and a dosage of the aluminum oxide is 10-30 wt% of the first silicon-containing filler.

In one embodiment of this application, the filler further includes a first high-temperature fusion agent, and a dosage of the first high-temperature fusion agent is 10 wt% to 40 wt% of the first silicone-containing filler.

In an embodiment of this application, the first high-temperature fusion agent includes one or more of talcum powder, wollastonite, mica powder, kaolin, barium sulfate, and silica-alumina powder; and a material of the first high-temperature fusion agent is different from a material of the first silicon-containing filler.

In an embodiment of this application, the filler further includes a first lubricant, and a dosage of the first lubricant is 10 wt% to 40 wt% of the first silicon-containing filler.

In an embodiment of this application, the functional layer further includes a first ceramic precursor, a ratio of a volume of the first ceramic precursor to a sum of volumes of the first ceramic precursor and the first resin is less than 50%, or a ratio of mass of the first ceramic precursor to a sum of the mass of the first ceramic precursor and mass of the first resin is less than 50%.

In one embodiment of this application, the first ceramic precursor includes one or more of a polysilazane resin, a polyborosilazane resin, and a polycarbosilane resin.

In one embodiment of this application, the filler further includes a chopped fiber, and a dosage of the chopped fiber is 0 to 15 wt% of the first silicon-containing filler.

In one embodiment of this application, the chopped fiber includes one or more of a carbon fiber, a silicon carbide fiber, a silicon nitride fiber, a quartz fiber, an aluminum silicate fiber, an asbestos fiber, a high silica fiber, a boro-carbon fiber, and a carbon nanotube, and the chopped fiber has a length of 0.05 to 30 mm and a diameter of 1 to 15 µm.

In an embodiment of this application, the filler further includes a first heat-reflective filler, and a dosage of the first heat-reflective filler is 0 to 5 wt% of the first silicon-containing filler.

In an embodiment of this application, the first heat-reflective filler includes one or more of oxides or nitrides of titanium, iron, aluminum, zinc, lanthanum, and cerium.

In one embodiment of this application, the heat-resistant protective member further includes a reinforcing layer stacked with the functional layer, and a thickness ratio of the functional layer to the reinforcing layer is (8-10) : (1-4).

In one embodiment of this application, the reinforcing layer is a fiber matrix; or the reinforcing layer includes a fiber matrix and a second resin, and the second resin is dispersed in pores of the fiber matrix and/or on a surface of the fiber matrix to form a compound layer.

In one embodiment of this application, when the reinforcing layer includes the fiber matrix and the second resin, a mass content of a carbon element in the second resin is greater than 40%; the fiber matrix includes fiber cloth and/or fiber felt; and a fiber of the fiber matrix includes one or more of a carbon fiber, a silicon carbide fiber, a silicon nitride fiber, a quartz fiber, an aluminum silicate fiber, an asbestos fiber, a high silica fiber, a boro-carbon fiber, and a carbon nanotube.

In an embodiment of this application, the first resin includes one or a combination of more of a phenolic resin, a furfural acetone resin, a benzoxazine resin, a furan resin, polyurea, and a phenolic modified epoxy resin; and/or the second resin includes one or a combination of more of a phenolic resin, a furfural acetone resin, a benzoxazine resin, a furan resin, polyurea, and a phenolic modified epoxy resin.

In one embodiment of this application, a first viscosity regulator is dispersed in the first resin, and a dosage of the first viscosity regulator is 1% to 10% of a volume of the first resin; and/or, a first curing agent is dispersed in the first resin; and/or, a first flame retardant is dispersed in the first resin, and a dosage of the first flame retardant is 5% to 40% of mass of the first resin; and/or, a second viscosity regulator is dispersed in the second resin, and a dosage of the second viscosity regulator is 1% to 10% of a volume of the second resin; and/or, a second curing agent is dispersed in the second resin; and/or, a second flame retardant is dispersed in the second resin, and a dosage of the second flame retardant is 5% to 40% of mass of the second resin.

In one embodiment of this application, the reinforcing layer includes the fiber matrix and the second resin; and a phase-change material is further dispersed in the second resin, and a dosage of the phase-change material is 5% to 20% of a volume of the fiber matrix.

In an embodiment of this application, the fiber matrix includes the fiber cloth; and the fiber cloth is one or more of a fiber twill fabric, a fiber satin fabric, a fiber uniaxial fabric, and a fiber multiaxial fabric.

In one embodiment of this application, the reinforcing layer includes the fiber matrix and the second resin; and the reinforcing layer further includes a second ceramic precursor, a ratio of a volume of the second ceramic precursor to a sum of volumes of the second ceramic precursor and the second resin is less than 50%, or a ratio of mass of the second ceramic precursor to a sum of the mass of the second ceramic precursor and mass of the second resin is less than 50%.

In one embodiment of this application, the second ceramic precursor includes one or more of a polysilazane resin, and a polyborosilazane resin.

In one embodiment of this application, the fiber matrix includes a first fiber matrix and a second fiber matrix; the second resin is dispersed in pores of the first fiber matrix and/or covers two opposite surfaces of the first fiber matrix to form first compound layers; the second ceramic precursor is dispersed in pores of the second fiber matrix and/or covers two opposite surfaces of the second fiber matrix to form second compound layers; wherein, the first compound layers and the second compound layers are stacked to form a stacked structure; or two first compound layers clamp at least one second compound layer to form a stacked structure; or two second compound layers clamp at least one first compound layer to form a stacked structure.

In one embodiment of this application, a mixture of the second resin and the second ceramic precursor is dispersed in the pores of the fiber matrix and/or covers two opposite surfaces of the fiber matrix.

In one embodiment of this application, the second ceramic precursor is coated on one surface of the compound layer or coated on two opposite surfaces of the compound layer.

In one embodiment of this application, the reinforcing layer includes the fiber matrix and the second resin; and the reinforcing layer further includes a second silicon-containing filler, and the second silicon-containing filler accounts for 40% to 70% of a volume of the fiber matrix.

In an embodiment of this application, the second silicon-containing filler includes one or a combination of more of silica aerogel powder, quartz powder, mica powder, ceramic micro powder, white carbon black, wollastonite, montmorillonite, and talcum powder.

In one embodiment of this application, the second silicon-containing filler includes silica aerogel powder and mica powder, and a mass ratio of the silica aerogel powder to the mica powder is 1:3 to 1: 1.

In one embodiment of this application, the second silicon-containing filler includes silicon dioxide and aluminum oxide; and a dosage of the silicon dioxide is 50 to 80 wt% of the second silicon-containing filler, and a dosage of the aluminum oxide is 10 to 30 wt% of the second silicon-containing filler.

In one embodiment of this application, the second silicon-containing filler is coated on a surface of the compound layer or embedded into the second resin.

In one embodiment of this application, the reinforcing layer further includes a second high-temperature fusion agent, and a dosage of the second high-temperature fusion agent is 10 wt% to 40 wt% of the second silicone-containing filler.

In an embodiment of this application, the second high-temperature fusion agent includes one or more of talcum powder, wollastonite, mica powder, kaolin, barium sulfate, and silica-alumina powder; and a material of the second high-temperature fusion agent is different from a material of the second silicon-containing filler.

In one embodiment of this application, the reinforcing layer further includes a second lubricant, and a dosage of the second lubricant is 10 to 40 wt% of the second silicone-containing filler.

In one embodiment of this application, the second lubricant includes one or a combination of more of polyamide wax, polyethylene wax and paraffin.

In one embodiment of this application, the reinforcing layer further includes a second heat-reflective filler, and the second heat-reflective filler is 5 to 30 wt% of the second silicone-containing filler.

In an embodiment of this application, the second heat-reflective filler includes one or more of oxides or nitrides of titanium, iron, aluminum, zinc, lanthanum, and cerium.

In one embodiment of this application, the reinforcing layer includes the fiber matrix and the second resin; and the reinforcing layer further includes a colorant, and the colorant includes one or more of carbon black, titanium white, iron black, oil-based color concentrate, and transition metal coloring ionic oxides.

In one embodiment of this application, the heat-resistant protective member further includes a gas absorbent; and the gas absorbent is filled in the functional layer and/or the reinforcing layer, or the gas absorbent is disposed between the functional layer and the reinforcing layer to form a gas absorbent layer.

In one embodiment of this application, the heat-resistant protective member further includes a heat insulation layer, and the heat insulation layer is disposed on a side of the functional layer away from the reinforcing layer.

In an embodiment of this application, the heat insulation layer includes an aerogel coating or aerogel felt.

In order to resolve the foregoing technical problem, another technical solution adopted in this application is as follows: a battery is provided, and includes the heat-resistant protective member according to any one of the foregoing embodiments.

In an embodiment of this application, the battery includes:
a battery cell, where a first wall of the battery cell is provided with a pressure relief structure; and
the heat-resistant protective member is arranged opposite to the pressure relief structure.

In an embodiment of this application, the battery includes:
a plurality of battery cells, where the plurality of battery cells include a first battery cell and a second battery cell that are adjacent, and the first battery cell and the second battery cell are arranged along a first direction; and
the heat-resistant protective member is arranged between the first battery cell and the second battery cell.

Beneficial effects:
i.When subjected to thermal shock, the first resin can carbonize and absorb heat to form a charcoal layer to resist heat penetration, and the first filler can increase the integrality of the heat-resistant protective member and improve the strength of flame impact resistance.
ii.The silicone-containing fillers melt and gasify to absorb a large amount of heat, and the silicone-containing fillers react with the charcoal layer formed by the first resin to generate solid silicon carbide, and the solid silicon carbide can resist high-temperature erosion and high-temperature shear and stretch or compression, can effectively improve the heat-resistant protective member and avoid the heat-resistant protective member from being broken through.

### BRIEF DESCRIPTION OF DRAWINGS

To describe the technical solutions in embodiments of this application more clearly, the following outlines the drawings to be used in the description of embodiments of this application. Evidently, the drawings outlined below are merely a part of embodiments of this application. A person of ordinary skill in the art may derive other drawings from such drawings without making any creative effort.
FIG. 1 is a schematic structural diagram of a vehicle according to an embodiment of this application;
FIG. 2 is a schematic structural exploded view of a battery according to an embodiment of this application;
FIG. 3 is a schematic structural exploded view of a battery cell according to an embodiment of this application;
FIG. 4 is a schematic structural exploded view of a battery according to another embodiment of this application;
FIG. 5 is a half-sectional schematic structural diagram of a box of a battery according to an embodiment of this application;
FIG. 6 is a schematic diagram of a top cap of a battery according to an embodiment of this application;
FIG. 7 is a schematic structural exploded view of a battery according to still another embodiment of this application;
FIG. 8 is a schematic structural exploded view of a battery according to another embodiment of this application;
FIG. 9 is a schematic structural exploded view of a bottom wall of a battery according to an embodiment of this application;
FIG. 10 is a half-sectional schematic structural diagram of a box of a battery according to another embodiment of this application;
FIG. 11 is a schematic structural exploded view of a bottom wall of a battery according to another embodiment of this application; and
FIG. 12 is a schematic structural exploded view of a battery disclosed in another embodiment of this application;
FIG. 13 is a schematic partial structural diagram of the battery in FIG. 12;
FIG. 14 is a cross-sectional view of a battery cell and a heat baffle disclosed in an embodiment of this application;
FIG. 15 is a schematic structural diagram of a heat-resistant protective member disclosed in an embodiment of this application;
FIG. 16 is a schematic structural diagram of a heat-resistant protective member disclosed in another embodiment of this application;
FIG. 17 is a schematic structural diagram of a heat-resistant protective member disclosed in another embodiment of this application;
FIG. 18 is a schematic structural diagram of a heat-resistant protective member disclosed in another embodiment of this application;
FIG. 19 is a schematic structural diagram of a heat-resistant protective member disclosed in an embodiment of this application;
FIG. 20 is a schematic structural diagram of a heat-resistant protective member disclosed in another embodiment of this application;
FIG. 21 is a schematic structural diagram of a heat-resistant protective member disclosed in another embodiment of this application;
FIG. 22 is a schematic structural diagram of a heat-resistant protective member disclosed in another embodiment of this application;
FIG. 23 is a schematic structural diagram of a heat-resistant protective member disclosed in another embodiment of this application;
FIG. 24 is a schematic structural diagram of a heat-resistant protective member disclosed in another embodiment of this application;
FIG. 25 is a schematic structural diagram of a heat-resistant protective member disclosed in an embodiment of this application;
FIG. 26 is a schematic structural diagram of a heat-resistant protective member disclosed in another embodiment of this application;
FIG. 27 is a schematic structural diagram of a heat-resistant protective member disclosed in another embodiment of this application; and
FIG. 28 is a schematic structural diagram of a heat-resistant protective member disclosed in another embodiment of this application.

### List of reference numerals:

vehicle 1, battery 2, battery cell 6, heat-resistant protective member 8, thermal resistance layer 9;
box 20, first battery cell 6a, second battery cell 6b, electrode assembly 61, shell 62, electrode terminal 63, connecting member 64, pressure relief structure 65, thermal management component 66, heat insulation component 67, first wall 68, second wall 69, fiber resin compound layer 81, fiber matrix 810, resin 811, gas absorbent layer 82, heat insulation layer 83, functional layer 84, first resin 841, filler 842, reinforcing layer 85, second resin 850, strengthening layer 86; and
first box portion/top cap 201, second box portion/bottom wall 202, accommodation space 203, housing 621, end cap 622, positive electrode terminal 631, negative electrode terminal 632, fragile region 661.

### DETAILED DESCRIPTION OF EMBODIMENTS

Embodiments of the technical solution of this application are described in detail below in conjunction with the accompanying drawings. The following embodiments are only used to more clearly illustrate the technical solution of this application, and therefore, are merely examples and cannot be used to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first", "second", and the like are only used to distinguish between different objects, and cannot be understood as indicating or implying relative importance or implicitly indicating a quantity, specific order, or primary and secondary relationship of the indicated technical features. In the description of the embodiments of this application, the meaning of "plurality" is more than two, unless otherwise explicitly and specifically limited.

Reference to "embodiments" in this specification means that particular features, structures, or characteristics described with reference to the embodiments may be included in at least one embodiment of this application. Occurrence of the phrase in various places in this specification does not necessarily refer to the same embodiment, nor is an independent or alternative embodiment that is mutually exclusive with other embodiments. It is understood explicitly and implicitly by a person skilled in the art that the embodiments described in this specification may be combined with other embodiments.

In the description of the embodiments of this application, the term "and/or" describes only an association relationship between associated objects and represents that three relationships may exist. For example, A and/or B may represent the following three cases: only A exists, both A and B exist, and only B exists. In addition, the character "/" in this specification generally indicates an "or" relationship between the associated objects.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified or limited, the technical terms "mounted", "connected", "coupled", "fixed", and other terms shall be understood broadly, for example, the connection may be fixed connection, detachable connection, or integral connection; or may alternatively be mechanical or electrical connection; or may alternatively be direct connection or indirect connection through an intermediate medium, or may be internal connection between two elements or an interaction relationship between two elements. A person of ordinary skill in the art may understand specific meaning of the above terms in the embodiments of this application based on specific circumstances.

In this application, a battery cell may include a lithium metal battery, a sodium metal battery, a magnesium metal battery, or the like, and this is not limited in the embodiments of this application. The battery cell may be of a cylindrical, flat, or other shapes, and this is not limited in the embodiments of this application. The battery cell is generally classified, based on packaging manners, into three types: a cylindrical battery cell, a square battery cell, and a pouch battery cell, and this is not limited in the embodiments of this application either. For ease of description, a lithium metal battery is used as an example for description in the following embodiments.

A battery mentioned in the embodiments of this application refers to a single physical module including one or more battery cells to provide a higher voltage and larger capacity. For example, the battery mentioned in this application may include a battery module, a battery pack, or the like. The battery generally includes a box for packaging one or more battery cells. The box can prevent liquid or other foreign objects from affecting charging or discharging of the battery cell.

In a new energy battery vehicle, a battery box serving as an energy source is installed in the vehicle, and a battery in the battery box discharges and drives an electric motor of the new energy vehicle to run. With gradual increase of people's requirement for the new energy vehicle, requirements for energy density of the battery are also increasing. A single battery or a plurality of batteries in an anode silicon-doped high-energy battery system can produce, during thermal runaway, a gas with a temperature > 1500 °C. When the maximum speed of the gas is greater than a speed of sound, a heat insulation material that is mainly aerogel in the prior art cannot block temperature impact and airflow impact of such a high-temperature and high-speed airflow. Consequently, structural thermal disintegration and mechanical disintegration occurs on the heat insulation material that is mainly the aerogel, resulting in protection failure. The high-temperature and high-speed airflow rushes through a battery pack box, causing the battery box made of steel plate with a melting point of 1500 °C to burn directly, and continue burning for about 30s, which directly destroys a main body of the new energy vehicle and endangers safety of passengers.

In order to resolve the above problem, embodiments of this application provide a technical solution. A heat-resistant protective member is arranged in the battery pack box, and the heat-resistant protective member can block a high-temperature and high-speed gas-solid mixture generated when the battery is thermally runaway, and protect the battery box from airflow impact and high-temperature melting, thereby improving safety performance of the battery.

The heat-resistant protective member described in the embodiments of this application are applicable to a battery and an electrical device using the battery.

The electrical device may be a vehicle, a mobile phone, a portable device, a laptop, a ship, a spacecraft, an electric toy, a power tool, or the like. The vehicle can be a fuel vehicle, a gas vehicle, or a new energy vehicle. The new energy vehicle may be a pure electric vehicle, a hybrid electric vehicle, a range-extended vehicle, or the like. The spacecraft includes an airplane, a rocket, a space shuttle, a spaceship, and the like. The electric toy includes a stationary or mobile electric toy, such as a game console, an electric vehicle toy, an electric ship toy, and an electric aircraft toy. The power tool includes a metal cutting power tool, a grinding power tool, an assembly power tool, and a railway power tool, such as an electric drill, an electric grinder, an electric wrench, an electric screwdriver, an electric hammer, an impact electric drill, a concrete vibrator, and an electric planer. The embodiments of this application do not make special restrictions on the foregoing electrical apparatus.

For ease of description in the following embodiments, a vehicle is used as an example of the electrical device.

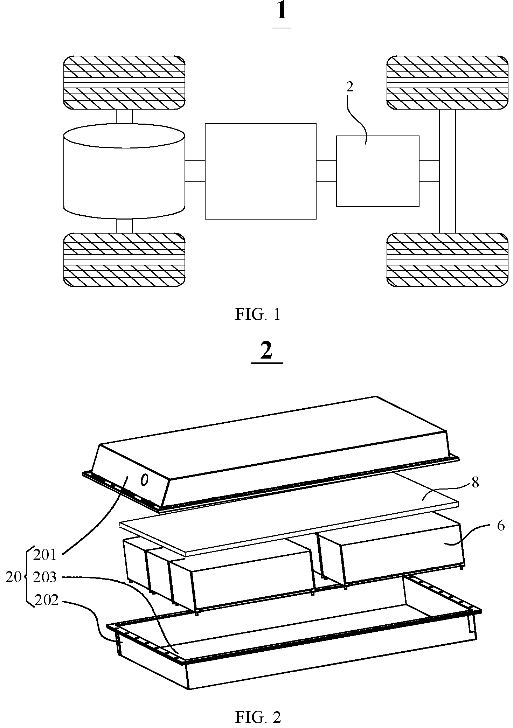

FIG. 1 is a schematic structural diagram of a vehicle 1 according to an embodiment of this application. As shown in FIG. 1, the vehicle 1 is internally provided with a battery 2, and the battery 2 may be arranged at a bottom or head or tail of the vehicle 1. The battery 2 can be used for supplying power to the vehicle 1. For example, the battery 2 can be used as an operating power source for the vehicle 1.

FIG. 2 is a schematic exploded view of a battery 2 according to an embodiment of this application. As shown in FIG. 2, the battery 2 includes a box 20, a battery cell 6, and a heat-resistant protective member 8. The battery cell 6 and the heat-resistant protective member 8 are accommodated in the box 20.

The box 20 is used for accommodating the battery cell 6. The box 20 may be of a plurality of structures. In some embodiments, the box 20 may include a first box portion 201 and a second box portion 202, the first box portion 201 and the second box portion 202 cover each other, and the first box portion 201 and the second box portion 202 jointly define an accommodation space 203 for accommodating the battery cell 6. The second box portion 202 may be of a hollow structure with an opening end, the first box portion 201 is of a plate-like structure, and the first box portion 201 covers the opening side of the second box portion 202 to form the box 20 with the accommodation space 203. Alternatively, the first box portion 201 and the second box portion 202 may each be of a hollow structure with one opening side, and the opening side of the first box portion 201 covers the opening side of the second box portion 202 to form the box 20 with the accommodation space 203. Certainly, the first box portion 201 and the second box portion 202 may be of a plurality of shapes, such as cylinder and cuboid.

To improve airtightness between the first box portion 201 and the second box portion 202 that are connected, a sealing element such as a sealant or a sealing ring may be disposed between the first box portion 201 and the second box portion 202.

Assuming that the first box portion 201 fits on the top of the second box portion 202, the first box portion 201 is also be referred to as a top cap, and the second box portion 202 is also referred to as a bottom wall.

In the battery 2, there are a plurality of battery cells 6. The plurality of battery cells 6 may be connected in series or in parallel or in parallel and series, and "connected in parallel and series" means that there are both series and parallel connections in the plurality of battery cells 6. The plurality of battery cells 6 may be directly connected in series, in parallel, or in parallel and series, and then a whole formed by the plurality of battery cells 6 is accommodated in the box 20. Certainly, the plurality of battery cells 6 may first be connected in series or in parallel or in parallel and series to form battery modules (not shown in the figure), and then a plurality of battery modules are connected in series or in parallel or in parallel and series to form a whole that is accommodated in the box 20. The plurality of battery cells 6 in the battery modules may be electrically connected via a busbar part, so that the plurality of battery cells 6 in the battery modules are connected in parallel, in series, or in parallel and series.

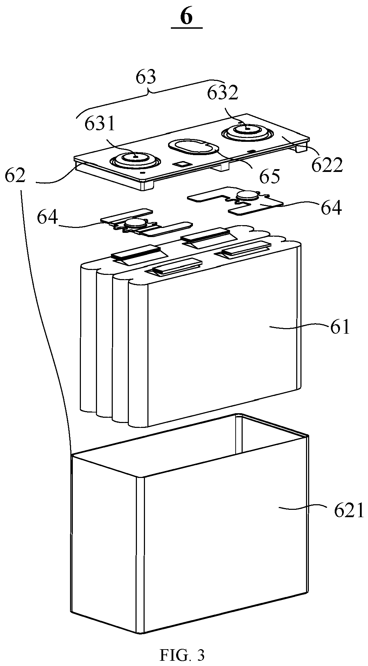

FIG. 3 is a schematic structural diagram of a battery cell 6 according to an embodiment of this application. As shown in FIG. 3, the battery cell 6 includes one or more electrode assemblies 61, a housing 621, and an end cap 622. The housing 621 and the end cap 622 form a shell or a battery shell 62. A wall of the housing 621 and the end cap 622 are both referred to as a wall of the battery cell 6. For a cuboid battery cell 6, the wall of the housing 621 includes a bottom wall and four side walls. A shape of the housing 621 depends on a shape of a combination of the one or more electrode assemblies 61. For example, the housing 621 may be a hollow cuboid or cube or cylinder, and one of surfaces of the housing 621 has an opening, so that the one or more electrode assemblies 61 can be placed in the housing 621. For example, when the housing 621 is the hollow cuboid or cube, one of surfaces of the housing 621 is an opening surface, that is, the surface does not have a wall body, so that the inside and outside of the housing 621 communicate with each other. When the housing 621 may be the hollow cylinder, an end surface of the housing 621 is an opening surface, that is, the end surface does not have a wall body, so that the inside and outside of the housing 621 communicate with each other. The end cap 622 covers an opening and is connected with the housing 621 to form a closed cavity for placing the electrode assembly 61. The housing 621 is filled with an electrolyte, such as an electrolytic solution.

The battery cell 6 may also include two electrode terminals 63, and the two electrode terminals 63 may be arranged on the end cap 622. The end cap 622 is usually of a flat plate shape, the two electrode terminals 63 are fastened on a flat plate surface of the end cap 622, and the two electrode terminals 63 are a positive electrode terminal 631 and a negative electrode terminal 632 respectively. Each electrode terminal 63 is arranged in correspondence with a connecting member 64, which may also be referred to as a current collector member 64, is located between the end cap 622 and the electrode assembly 61, and is used for electrically connecting the electrode assembly 61 and the electrode terminal 63.

In the battery cell 6, there may be one or more arranged electrode assemblies 61 based on an actual use requirement. As shown in FIG. 3, four independent electrode assemblies 61 are arranged in the battery cell 6.

The battery cell 6 may also be provided with a pressure relief structure 65. The pressure relief structure 65 is enabled when internal pressure or an internal temperature of the battery cell 6 reaches a threshold, to relieve the internal pressure or temperature.

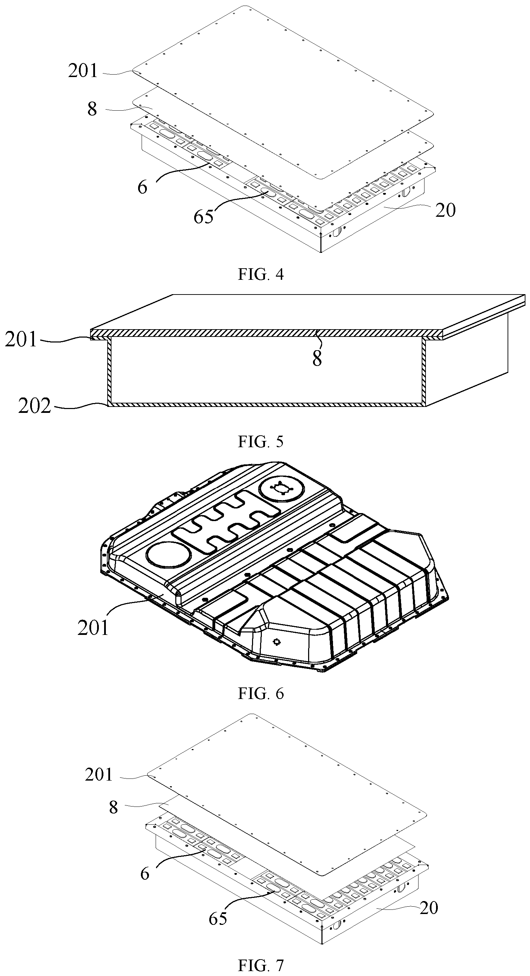

FIG. 4 is a schematic structural exploded view of a battery according to another embodiment of this application. As shown in FIG. 4, the battery 2 includes a battery cell 6, where a pressure relief structure 65 is arranged on a first wall of the battery cell 6; and a heat-resistant protective member 8, where the heat-resistant protective member 8 is arranged opposite to the pressure relief structure 65.

In embodiments of this application, the pressure relief structure 65 is a structural component that is enabled when internal pressure or an internal temperature of the battery cell 6 reaches a threshold, to relieve the internal pressure of the battery cell 6. For example, the pressure relief structure 65 may be a temperature-sensitive pressure relief structure, and the temperature-sensitive pressure relief structure is configured to be able to melt when the internal temperature of the battery cell 6 provided with the pressure relief structure 65 reaches the threshold; and/or the pressure relief structure 65 may be a pressure-sensitive pressure relief structure, and the pressure-sensitive pressure relief structure is configured to be able to rupture when internal air pressure of the battery cell 6 provided with the pressure relief structure 65 reaches the threshold. This application does not constitute any limitation on a type of the pressure relief structure.

The battery 2 includes the battery cell 6, and the pressure relief structure 65 for protecting the battery cell 6 is arranged on the first wall of the battery cell 6. The battery 2 also includes the heat-resistant protective member 8, and the heat-resistant protective member 8 is arranged opposite to the pressure relief structure 65, that is, the heat-resistant protective member 8 is directly opposite to the pressure relief structure 65.

In the foregoing solution, the pressure relief structure 65 and the heat-resistant protective member 8 are arranged opposite to each other. When thermal runaway occurs inside the battery cell 6, the heat-resistant protective member 8 made of a polymer matrix compound fiber can block a high-temperature and high-speed gas-solid mixture released by the pressure relief structure 65, and protect a battery shell from airflow impact and high-temperature melting, thereby ensuring safety of the battery 2.

In the foregoing solution, a resin in a polymer material is used as a matrix to prepare a fiber-reinforced resin compound board as the heat-resistant protective member 8. Compared with a matrix made of another polymer material, high temperature resistance performance and impact resistance performance of the fiber-reinforced resin compound board are better.

Optionally, as shown in FIG. 4, the battery cell 6 is accommodated in a box 20. The first wall is a wall of the battery cell 6, the wall being close to a top cap 201 of the box 20 and disposed opposite to the top cap 201.

When the first wall is a wall, close to the top cap 201 of the box 20 and opposite to the top cap 201, of the battery cell 6, the pressure relief mechanism 65 is close and oriented to the top cap 201.

In the foregoing solution, the heat-resistant protective member 8 is arranged between the pressure relief structure 65 and the top cap 201. When the battery cell 6 is thermally runaway, and the pressure relief structure 65 releases the internal temperature and pressure of the battery cell 6, the heat-resistant protective member 8 of the polymer matrix compound fiber can block the high-temperature and high-speed gas-solid mixture released by the pressure relief structure 65, and protect the top cap 201 of the battery 2 from the airflow impact and the high-temperature melting, thereby protecting the safety of the battery 2.

FIG. 5 is a half-sectional schematic structural diagram of a box of a battery according to an embodiment of this application. As shown in FIG. 5, optionally, a heat-resistant protective member 8 is integrated with a top cap 201.

The heat-resistant protective member 8 is integrated with the top cap 201, for example, pasted on a surface of the top cap 201 as a patch, that is, the heat-resistant protective member 8 and the top cap 201 can together serve as the top cap 201 of a battery 2, or the heat-resistant protective member 8 may alternatively separately serve as the top cap 201 of the battery 2 as shown in FIG. 5.

In the foregoing solution, when the heat-resistant protective member 8 and the top cap 201 together serve as the top cap 201 of the battery 2, the top cap 201 of the battery 2 has a two-layer structure, and the heat-resistant protective member 8 protects the top cap 201, so as to better protect safety of the battery 2. When the heat-resistant protective member 8 separately serves as the top cap 201 of the battery 2, the heat-resistant protective member 8 can not only protect the top cap 201 of the battery 2 from high temperature and airflow impact, but also simplify a structure of the battery 2 and reduce production costs of the battery 2.

FIG. 6 is a schematic diagram of a top cap according to an embodiment of this application. As shown in FIG. 6, when a heat-resistant protective member 8 is integrated with the top cap 201, the top cap 201 may be of an irregular shape. In embodiments of this application, the top cap 201 may alternatively be square, circular, or the like, and this is not limited in this application. That is, in a production process, the top cap 201 and the heat-resistant protective member 8 of any shape can be manufactured based on a specific product requirement.

Optionally, as shown in FIG. 4, the heat-resistant protective member 8 is arranged between the top cap 201 and the first wall.

The heat-resistant protective member 8 is arranged between the top cap 201 and the first wall, that is, the pressure relief structure 65 faces the top cap 201, and the heat-resistant protective member 8 is arranged between the top cap 201 and the pressure relief structure 65.

In the foregoing solution, the heat-resistant protective member 8 is arranged between the top cap 201 and the pressure relief structure 65, and the pressure relief structure 65 faces the top cap 201. In this way, the heat-resistant protective member 8 can directly protect the top cap 201, so that the top cap 201 that is directly opposite to the pressure relief structure 65 is protected from high temperature and airflow impact, thereby ensuring safety of a battery 2.

Still refer to FIG. 4, optionally, the heat-resistant protective member 8 is of the same size as the top cap 201.

The heat-resistant protective member 8 is arranged between the top cap 201 and the pressure relief structure 65, and sizes of the heat-resistant protective member 8 and the top cap 201 are the same, so that the heat-resistant protective member 8 can more comprehensively protect the top cap 201.

In the foregoing solution, when the heat-resistant protective member 8 is arranged between the top cap 201 and the pressure relief structure 65, and the heat-resistant protective member 8 and the top cap 201 are of the same size, the heat-resistant protective member 8 can not only more comprehensively protect the top cap 201, so that the top cap 201 is protected from the high-temperature and high-speed gas-solid mixture released by the pressure relief structure 65, but also can improve sealing effect on the inside of the battery 2. In addition, the same size of the heat-resistant protective member 8 and the top cap 201 also facilitates assembly and reduces assembly difficulty.

FIG. 7 is a schematic structural exploded view of a battery according to another embodiment of this application. As shown in FIG. 7, optionally, a size of a heat-resistant protective member 8 is smaller than that of a top cap 201.

In the foregoing solution, the heat-resistant protective member 8 is arranged between the top cap 201 and a first wall of a pressure relief structure 65. When the size of the heat-resistant protective member 8 is smaller than that of the top cap 201, the heat-resistant protective member 8 can not only protect the top cap 201, but also improve safety performance of the battery 2, and can also reduce production costs.

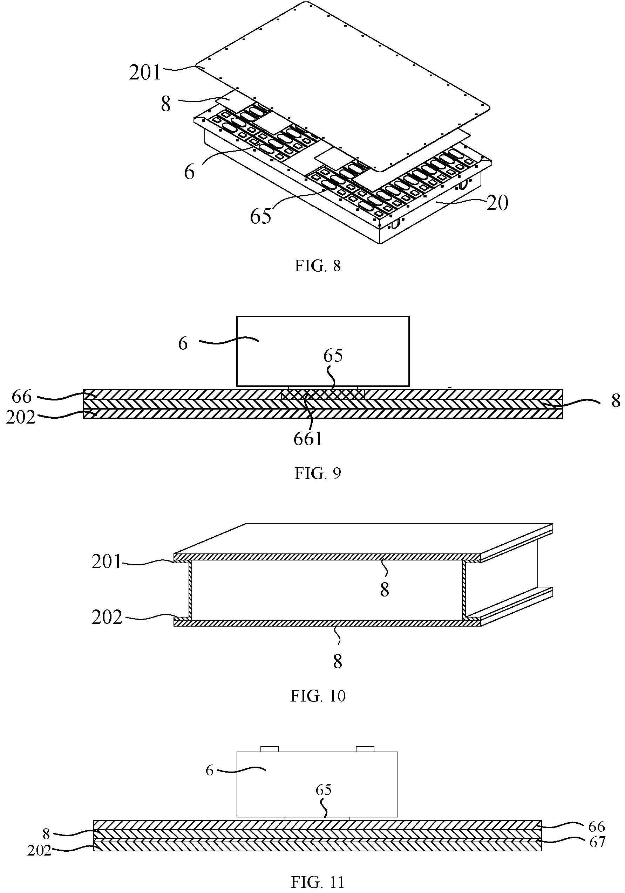

FIG. 8 is a schematic structural exploded view of a battery according to another embodiment of this application. As shown in FIG. 8, optionally, a heat-resistant protective member 8 is a strip-shaped plate, and a projection of the heat-resistant protective member 8 on a first wall covers a pressure relief structure 65.

A shape of the heat-resistant protective member 8 may be a strip shown in FIG. 8, or may alternatively be a circle or any other shape, provided that the projection of the heat-resistant protective member 8 on the first wall covers the pressure relief structure 65, and can play a function of protecting a box of the battery 2. This application does not have any restriction on the shape of the heat-resistant protective member 8.

In the foregoing solution, the heat-resistant protective member 8 is arranged between a top cap 201 and the first wall. When the heat-resistant protective member 8 is strip-shaped and the projection on the first wall covers the pressure relief structure 65, the heat-resistant protective member 8 can maintain a good protection effect on the top cap 201, and can also reduce costs to the greatest extent, which avoids waste of materials in a non-protected region.

Optionally, the heat-resistant protective member 8 is connected with the top cap 201 by bolting or gluing.

There are a plurality of manners of connection between the heat-resistant protective member 8 and the top cap 201, provided that the two are fastened. This is not limited in this application. However, in an actual production process, choosing a convenient and operable connection manner is conducive to wide promotion in practical application.

In the foregoing solution, the bolting or gluing is used to implement the connection between the heat-resistant protective member 8 and the top cap 201, and such a connection mode is simple, has strong operability, and is conducive to being widely used in production.

FIG. 9 is a schematic structural diagram of a bottom wall of a battery according to an embodiment of this application. As shown in FIG. 9, optionally, a battery cell 6 is accommodated in a box 20, and a first wall is a wall of the battery cell 6 close to the bottom wall 202 of the box 20 and opposite to the bottom wall 202.

When the first wall is a wall, close to the bottom wall 202 of the box 20 and opposite to the bottom wall 202, of the battery cell 6, the pressure relief mechanism 65 is close and oriented to the bottom wall 202.

In the foregoing solution, the heat-resistant protective member 8 is arranged between the pressure relief structure 65 and the bottom wall 202. When the battery cell 6 is thermally runaway, and the pressure relief structure 65 releases an internal temperature and pressure of the battery cell 6, the heat-resistant protective member 8 of a polymer matrix compound fiber can block a high-temperature and high-speed gas-solid mixture released by the pressure relief structure 65, and protect the bottom wall 202 of the battery 2 from airflow impact and high-temperature melting, thereby protecting safety of the battery 2.

FIG. 10 is a half-sectional schematic structural diagram of a battery box according to another embodiment of this application. As shown in FIG. 10, optionally, a heat-resistant protective member 8 is integrated with a bottom wall 202.

The heat-resistant protective member 8 is integrated with the bottom wall 202, that is, the heat-resistant protective member 8 and the bottom wall 202 can together serve as the bottom wall 202 of a battery 2, or the heat-resistant protective member 8 may alternatively separately serve as the bottom wall 202 of the battery 2 as shown in FIG. 10.

In the foregoing solution, when the heat-resistant protective member 8 and the bottom wall 202 together serve as the bottom wall 202 of the battery 2, the bottom wall 202 of the battery 2 has a two-layer structure, and the heat-resistant protective member 8 protects the bottom wall 202, so as to better protect safety of the battery 2. When the heat-resistant protective member 8 separately serves as the bottom wall 202 of the battery 2, the heat-resistant protective member 8 can not only protect the bottom wall 202 of the battery 2 from high temperature and airflow impact, but also simplify a structure of the battery 2 and reduce production costs of the battery 2.

When the pressure relief structure 65 inside the battery 2 only faces the top cap 201, the heat-resistant protective member 8 is integrated with the top cap 201 to protect the safety of the battery 2. When the pressure relief structure 65 only faces the bottom wall 202, the heat-resistant protective member 8 is integrated with the bottom wall 202 to protect the safety of the battery 2. When pressure relief structures 65 inside the battery 2 face both the top cap 201 and the bottom wall 202, as shown in FIG. 10, heat-resistant protective members 8 may be arranged on both the top cap 201 and the bottom wall 202. This application does not make specific restrictions on setting of the heat-resistant protective member 8 in the battery 2, provided that there is the heat-resistant protective member 8 on a wall directly opposite to the pressure relief structure 65 of the battery cell 6 in the battery 2, that is, the heat-resistant protective members 8 may be the top cap 201, the bottom wall 202, or a side wall. In addition, the heat-resistant protective member 8 may alternatively be a cross beam in the battery 2, and a specific position of the heat-resistant protective member 8 may be modified based on an arrangement position of the battery cell 6 in the battery 2, or may alternatively be arranged at any position in the battery 2 based on an actual application requirement.

Optionally, as shown in FIG. 9, the heat-resistant protective member 8 is arranged between the bottom wall 202 and the first wall.

The heat-resistant protective member 8 is arranged between the bottom wall 202 and the first wall, that is, the pressure relief structure 65 faces the bottom wall 202, and the heat-resistant protective member 8 is arranged between the bottom wall 202 and the pressure relief structure 65.

In the foregoing solution, the heat-resistant protective member 8 is arranged between the bottom wall 202 and the pressure relief structure 65, and the pressure relief structure 65 faces the top cap 201. In this way, the heat-resistant protective member 8 can directly protect the bottom wall 202, so that the bottom wall 202 that is directly opposite to the pressure relief structure 65 is protected from high temperature and airflow impact, thereby ensuring the safety of the battery 2.

Optionally, as shown in FIG. 9, a thermal management component 66 is arranged between the heat-resistant protective member 8 and the first wall, and the thermal management component 66 is used for accommodating fluid to regulate the temperature of the battery cell 6.

The thermal management component 66 is used for accommodating the fluid to regulate the temperature of the battery cell 6. The fluid herein may be liquid or a gas, and regulating the temperature means heating or cooling the battery cell 6. In a case where the battery cell 6 is cooled or the temperature of the battery cell 6 is reduced, the thermal management component 66 is used for accommodating cooling fluid to reduce the temperature of the battery cell 6. In this case, the thermal management component 66 may also be referred to as a cooling component, a cooling system, a cooling plate, or the like, and the fluid that the thermal management component 66 accommodates may also be referred to as a cooling medium or cooling fluid, and more specifically, may be referred to as a coolant or a cooling gas. In addition, the thermal management component 66 may also be used for heating to increase the temperature of the battery cell 6, and this is not limited in embodiments of this application. Optionally, the fluid may be circulating to achieve a better temperature regulation effect. Optionally, the fluid may be water, a mixture of water and glycol, air, or the like.

In the foregoing solution, the heat-resistant protective member 8 is arranged between the first wall and the box of the battery 2 or the heat-resistant protective member 8 is directly used as the box of the battery 2 to protect the box of the battery 2 from high temperature and airflow impact, thereby protecting the safety of the battery 2. The thermal management component that regulates the temperature for the battery cell 6 is arranged between the first wall and the heat-resistant protective member 8, so that the temperature of the battery cell 6 can be regulated based on a requirement of the battery cell 6, and the battery cell 6 can work properly.

Optionally, the thermal management component 66 includes a fragile region 661 disposed opposite to the pressure relief mechanism 65. The fragile region 661 is configured to be broken by emissions of the battery cell 6 when the pressure relief mechanism 65 is actuated, so as to let the emissions pass through the fragile region 661.

The fragile region 661 may be any configuration easily breakable by the emissions, and the configuration of the fragile region is not limited herein.

The thermal management component 66 may have a flow channel in which a heat conductive material forms fluid. The fluid flows in the flow channel and conducts heat through the heat conductive material to regulate the temperature of the battery cell 6. In embodiments of this application, the fragile region 661 can have only the heat conductive material without fluid, a thin heat conductive material layer has been formed, and it is easy for emissions to destroy the layer. For example, a side of the fragile region 661 close to the bottom wall 202 may be the heat conductive material layer, to form the fragile region 661.

In the foregoing solution, the heat-resistant protective member 8 is arranged between the first wall and the box of the battery 2 or the heat-resistant protective member 8 is directly used as the box of the battery 2, so that the safety of the battery 2 can be protected. The thermal management component 66 is arranged between the first wall and the heat-resistant protective member 8 to regulate the temperature of the battery cell 6 based on an actual requirement of the battery cell 6 to ensure a normal function of the battery cell 6. The fragile region 661 is arranged on the thermal management component 66, so that when the fragile region 661 is destroyed by airflow impact or the high temperature, the emissions can be quickly discharged through the fragile region 661 and away from the battery cell 6, danger of the emissions to the battery 2 is reduced, and safety performance of the battery 2 is reinforced.

FIG. 11 is a schematic structural exploded view of a bottom wall of a battery according to another embodiment of this application. As shown in FIG. 11, in an embodiment of this application, a heat insulation component 67 is arranged between a heat-resistant protective member 8 and a box 20.

In the foregoing solution, the heat-resistant protective member 8 is added between a first wall provided with a pressure relief structure 65 and the box 20, and can protect the box 20 of a battery 2 from high temperature and high-speed airflow impact. The heat insulation component 67 is further arranged between the heat-resistant protective member 8 and the box 20 again, can further reduce the temperature of the box 20, and protect safety of the battery 2.

Optionally, the air component 67 is an air interlayer.

The purpose of adding the heat insulation component 67 is to further reduce the temperature of the box 20. Using an air interlayer as the heat insulation component 67 can greatly reduce the heat transfer from inside the battery 2 to the box 20, and the heat insulation effect is significant.

In the foregoing solution, an air interlayer is arranged between the heat-resistant protective member 8 and the box 20 as the heat insulation component 67, so that the temperature of the box 20 can be further reduced, and safety performance of the battery 2 is reinforced.

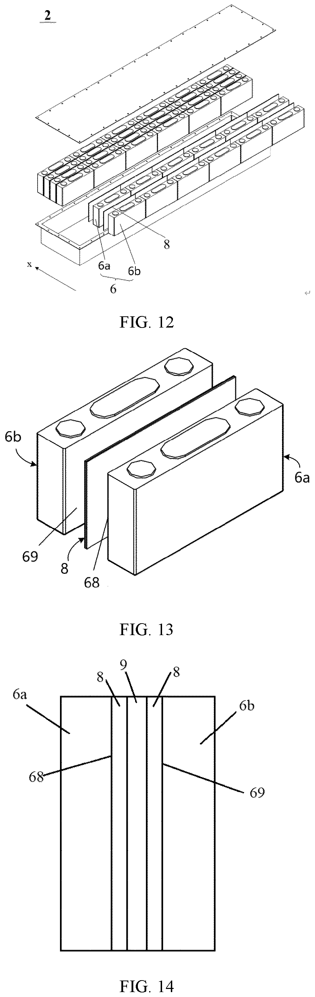

FIG. 12 is a schematic structural diagram of a battery 2 according to an embodiment of this application. As shown in FIG. 4, the battery 2 includes a plurality of battery cells 6, the plurality of battery cells 6 includes a first battery cell 6a and a second battery cell 6b that are adjacent to each other, the first battery cell 6a and the second battery cell 6b are arranged along a first direction x, the battery 2 further includes a heat-resistant protective member 8, and the heat-resistant protective member 8 is arranged between the first battery cell 6a and the second battery cell 6b.

The heat-resistant protective member 8 is arranged between the first battery cell 6a and the second battery cell 6b. When a part of the battery cells 6 in the battery 2 are thermally runaway, the heat-resistant protective member 8 can prevent the battery cell 6 that is thermally runaway from transferring heat to an adjacent battery cell 6, so that diffusion of thermal runaway is avoided, thereby effectively preventing diffusion of thermal runaway in the battery 2, and enhancing safety of the battery 2.

In this embodiment of this application, as shown in FIG. 13, the heat-resistant protective member 8 is arranged between a first wall 68 of the first battery cell 6a and a second wall 69 of the second battery cell 6b, the first wall 68 is a wall with a largest surface area in walls of the first battery cell 6a, and the second wall 69 is a wall with a largest surface area in walls of the second battery cell 6b.

The heat-resistant protective member 8 is arranged between the walls with largest surface areas of the two adjacent battery cells 6, so that the heat-resistant protective member 8 prevents the diffusion of the thermal runaway of the battery cell 6 from being larger, which is more conducive to preventing the diffusion of the thermal runaway in the battery 2.

It should be understood that the heat-resistant protective members 8 may alternatively be arranged between other walls of the two adjacent battery cells 6. If there are battery cells 6 adjacent to all four sides of a battery cell 6, four side walls of the battery cell 6 may each be provided with a heat-resistant protective member 8 opposite to the side wall. Alternatively, the heat-resistant protective members 8 may be arranged based on arrangement of the battery cells 6 in the battery 2 and a space requirement. This is not limited in this application.

As shown in FIG. 14, two heat-resistant protective members 8 are arranged between the first battery cell 6a and the second battery cell 6b, and a thermal resistance layer 9 is sandwiched between the two heat-resistant protective members 8. The thermal resistance layer 9 is arranged between the two heat-resistant protective members 8 to form a "sandwich" structure. Therefore, the heat-resistant protective members 8 can protect the thermal resistance layer 9 from being deformed due to pressure of the battery cells 20, so that the thermal resistance layer 9 can better perform heat insulation, and it is ensured that the thermal resistance layer 9 effectively prevents the diffusion of the thermal runaway in the battery 2. Specifically, the thermal resistance layer 9 may be made of aerogel felt. It can be understood that the heat-resistant protective member 8 of this application may be arranged at any part, of the battery, that needs thermal protection, and the foregoing implementations are only examples.

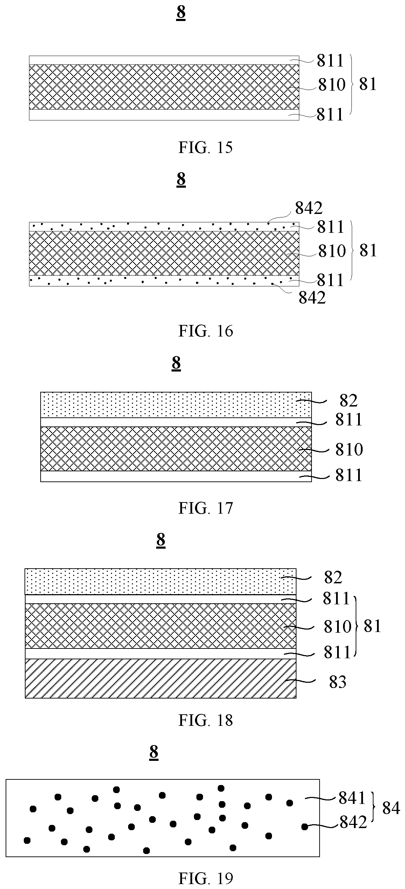

Refer to FIG. 15. Some embodiments of this application provide a heat-resistant protective member 8, the heat-resistant protective member 8 includes a compound layer, and the compound layer includes a fiber matrix 810 and a resin 811, where the resin 811 is dispersed in pores of the fiber matrix 810 and/or a surface of the fiber matrix 810. That is, the heat-resistant protective member 8 includes a fiber resin (Fiber Resin, FR) compound layer 81.

A shape and size of the heat-resistant protective members 8 provided in this application are not limited, and this application only uses a plate-like heat-resistant protective member as an example for illustration. The heat-resistant protective member 8 of this application may be arranged in a battery cell and arranged opposite to a pressure relief structure, or may be arranged between different battery cells, or the heat-resistant protective member 8 may be directly prepared into an upper cover or a bottom cover of the battery cell or a battery pack.

The fiber matrix 810 may provide high-temperature mechanical performance, and resist impact of high-temperature particles and airflow, and the continuous fiber matrix 810 has good mechanical strength and impact toughness. In a process of thermal impact, solid slag inside a cell is sprayed out with a heat flow, and then is blocked by the fiber matrix 810. The fiber matrix 810 is deformed to reduce impact of the flame heat flow, and the slag is consecutively attached to the fiber matrix 810 to form a barrier, to further resist the impact of the heat flow. A volume percent of the fiber matrix 810 in the compound layer is 50% to 75%, for example, 50%, 55%, 60%, 65%, 70%, or 75%. It can be understood that a higher content of the fiber matrix 810 indicates better strength and toughness of the heat-resistant protective member 8. If the volume percent of the fiber matrix 810 in the compound layer is less than 50%, the strength and toughness of the heat-resistant protective member 8 are poor, and if the volume percent of the fiber matrix 810 in the compound layer is greater than 75%, it is difficult to disperse the resin 811 in the pores of the entire fiber matrix 810 and/or the surface of the fiber matrix 810 to form a compound structure with strong binding force.

Fibers of the fiber matrix 810 include one or more of a carbon fiber, a silicon carbide fiber, a silicon nitride fiber, a quartz fiber, an aluminum silicate fiber, an asbestos fiber, a high silica fiber, a boro-carbon fiber, and a carbon nanotube, and can effectively resist the thermal impact. In some embodiments, the fiber matrix 810 includes fiber cloth and/or fiber felt, where the fiber cloth is a woven fabric of long fibers, which may be one or more of a fiber twill fabric, a fiber satin fabric, a fiber uniaxial fabric, and a fiber multiaxial fabric; and the fiber felt is a thin sheet-like product made of long or chopped fibers that are undirectedly combined together by a chemical binder or a mechanical action. The long fiber is a continuous protofilament, and the chopped fiber is a product that is a chopped continuous protofilament. The long fiber and the chopped fiber are relative concepts, and specific sizes may be selected based on a size of the fiber matrix 810.

In some embodiments, the fiber cloth and/or fiber felt in the fiber matrix 810 may be of one or more layers. In a specific implementation, the fiber matrix 810 includes fiber cloth and/or fiber felt arranged in a stacked manner, for example, a plurality of pieces of fiber cloth arranged in a stacked manner, a plurality of pieces of fiber felt arranged in a stacked manner, or fiber cloth and fiber felt that are arranged in a stacked manner. Fiber cloth and/or fiber felt of two or more layers may be bonded and cured by using the resin 811 after being stacked.

The resin 811 is dispersed in the pores of the fiber matrix 810 and/or covers upper and lower surfaces of the fiber matrix 810. A compound manner of the fiber matrix 810 and the resin 811 is not limited. Specifically, the fiber cloth and/or fiber felt can be impregnated in the resin 811 and then cured to form the compound layer, so that the resin 811 is dispersed in the pores of the fiber matrix 810 and/or cured onto the upper and lower surfaces of the fiber matrix 810. It can be understood that the compound layer may alternatively be formed by arranging the fiber cloth and/or the fiber felt and the sheet-like resin 811 in a stacked manner and then performing hot pressing. Upon the thermal impact, the resin 811 can carbonize and absorb heat to form a carbon layer to resist thermal penetration. The resin 811 includes one or a combination of more of a phenolic resin, a benzoxazine resin, a furan resin, polyurea, and a phenolic modified epoxy resin. The furan resin includes a furfural acetone resin. The resin 811 has a high carbon content, and the resin 811 has a high cracking temperature, so that when the resin 811 is decomposed and carbonized, more heat can be absorbed and thermal impact effect can be resisted. In some specific implementations of this application, a mass content of a carbon element in the resin 811 is greater than 40%, and preferably, the mass content of the carbon element in the resin 811 is greater than 50%.

In some embodiments, the compound manner of the fiber matrix 810 and the resin 811 is not limited to specifically including: impregnating fiber cloth of a plurality of layers in the resin 811 and then performing arrangement in a stacked manner, where curing conditions are as follows: first performing molding, where a molding temperature is 130 °C to 150 °C, and molding time is 20 to 40 min; and then performing baking in an oven, where a baking temperature is 120 °C to 180 °C, and baking time is 1 to 4h. Another manner is as follows: first performing semi-curing and then performing further curing on a preform of the heat-resistant protective member 8, where specifically, fiber cloth of a plurality of layers is first impregnated in the resin 811; and then stood at 25 °C (25 °C) until a surface is dry (semi-cured), or molded or dried in an oven at 50 °C to 80 °C for 10 to 40 min until a surface is dry (semi-cured); and then arranging a semi-cured perform of the heat-resistant protective member in a stacked manner and preforming curing, where curing conditions are as follows: first performing molding, where a molding temperature is 130 °C to 160 °C, and molding time is 10 to 40 min; and then performing baking in the oven, where a baking temperature is 150 °C to 200 °C, and baking time is 1 to 4h.

Further, in some embodiments, a viscosity regulator is dispersed in the resin 811, and the viscosity regulator includes one or a combination of more of methanol, ethanol, ethyl acetate, acetone, and butanone, to reduce viscosity of the resin 811. This facilitates infiltration, penetration, and production processing of the resin 811 and the fiber into an even product. Reducing the viscosity of the resin 811 facilitates addition of a filler 842, for example, a functional material such as a silica-containing particle or a chopped fiber. A dosage of the viscosity regulator is 1% to 10% of a volume of the resin 811, for example, 1%, 3%, 5%, 7%, or 10%. When the dosage of the viscosity regulator is less than 1%, the resin 811 has high viscosity and poor fluidity, and it is difficult to form a product with an even thickness. When the dosage of the viscosity regulator is higher than 10%, the resin 811 has low viscosity and strong fluidity, which causes a solvent in the resin 811 to volatilize during processing and molding of a composition, resulting in pore defects in a product. In addition, in some embodiments, when the viscosity of the resin 811 needs to be increased, the solvent in the resin 811 is usually volatilized by heating the resin 811 before composition of the resin 811 and the fiber matrix 810.

Optionally, in some embodiments, a curing agent may be dispersed in the resin 811, and the curing agent can effectively shorten the curing time of the resin 811, which is conducive to large-scale and batch production of heat-resistant protective members 8. For example, a curing agent used in the phenolic resin is methenamine, and a dosage of the methenamine is 2.5% to 3% of mass of the phenolic resin; and a curing agent used in the furfural acetone resin is phosphoric acid curing agent, and a dosage of the phosphoric acid curing agent is 6% to 7% of mass of the furfural acetone resin. In some other embodiments, the benzoxazine resin, the furan resin, and the polyurea do not use curing agents.

Optionally, in some embodiments, a flame retardant may also be dispersed in the resin 811 and used for preventing burning of the heat-resistant protective members 8, and the flame retardant may include one or more of ammonium polyphosphate, aluminum hydroxide, or DOPO. A dosage of the flame retardant is 5% to 40% of mass of the resin 811, for example, 5%, 10%, 15%, 20%, 25%, 30%, 35%, or 40%.

In some embodiments, a phase-change material is dispersed in the resin 811, and a dosage of the phase-change material is 5% to 20% of a volume of the fiber matrix 810, for example, 5%, 10%, 15%, or 20%. The phase-change material can absorb heat to resist thermal impact, and can reduce heat transfer of a fire-facing surface to a back fire surface. Specifically, the phase-change material may be made of a hydrated salt component, such as sodium sulfate decahydrate (Na₂SO₄. 10H₂O), calcium chloride hexahydrate (CaCl₂. 6H₂O), or magnesium chloride hexahydrate (MgCl₂·6H₂O).

In some embodiments, the heat-resistant protective member 8 further includes a ceramic precursor. Under an action of the thermal impact, the ceramic precursor may generate a ceramic material such as SiCN and/or SiCNO, which can increase temperature resistance and flame impact resistance strength of the heat-resistant protective member 8. The ceramic precursor may include one or more of a polysilazane resin, a polyborosilazane resin, and a polycarbosilane resin. On one hand, the ceramic precursor causes bending strength of the heat-resistant protective member to reduce at a room temperature, and on the other hand, the ceramic precursor reacts at a high temperature to generate the ceramic material. This does not reduce the temperature resistance and the flame impact resistance strength of the heat-resistant protective member 8. In an embodiment, a ratio of a volume of the ceramic precursor to a sum of volumes of the ceramic precursor and the resin 811 is less than 50%, or a ratio of mass of the ceramic precursor to a sum of the mass of the ceramic precursor and the mass of the resin 811 is less than 50%, thereby ensuring that the heat-resistant protective member has good bending strength at the room temperature while controlling costs of the heat-resistant protective member 8, so that a market competitive advantage of the heat-resistant protective member 8 is maintained while the temperature resistance and the flame impact resistance strength of the heat-resistant protective member 8 are improved.

A manner of adding the ceramic precursor to the heat-resistant protective member 8 is not limited. The ceramic precursor and the resin 811 may be dispersed together in the pores of the fiber matrix 810 and/or cover the upper and lower surfaces of the fiber matrix 810, or the ceramic precursor may be directly arranged on a surface of the fiber resin compound layer 81, or the ceramic precursor and the fiber matrix 810 are first compounded and then arranged with the fiber resin compound layer 81 in a stacked manner.

In some embodiments, the fiber matrix 810 may include a first fiber matrix and a second fiber matrix, where the resin 811 may be dispersed in pores of the first fiber matrix and/or cover two opposite surfaces of the first fiber matrix to form a first compound layer. The ceramic precursor is dispersed in pores of the second fiber matrix and/or cover two opposite surfaces of the second fiber matrix to form a second compound layer. The first compound layer and the second compound layer are arranged in a stacked manner to form a stacked structure. In a specific implementation, two first compound layers sandwich at least one second compound layer to form a stacked structure. In another specific implementation, two second compound layers sandwich at least one first compound layer to form a stacked structure. In another specific implementation, a plurality of first compound layers and a plurality of second compound layers are alternately arranged in a stacked manner.

In some embodiments, a mixture of the resin 811 and a ceramic precursor slurry is dispersed in the pores of the fiber matrix 810 and/or covers the two opposite surfaces of the fiber matrix 810 by impregnation and curing. For example, the ceramic precursor slurry is polysilazane, the resin 811 is mixed with the polysilazane, and fiber cloth is impregnated in a mixture of the resin 811 and the polysilazane, where curing conditions are as follows: first performing molding at 50 °C to 80 °C for 20 to 40 min; then heating to 130 °C to 150 °C for 20 to 40 min; and then baking at an oven for 150 °C to 180 °C for 1 to 2h until complete curing is performed. In some other embodiments, the ceramic precursor is coated in a form of a slurry at one surface of the compound layer, or on two opposite surfaces of the compound layer.

In some embodiments, refer to FIG. 16. The heat-resistant protective member 8 further includes the filler 842, and the filler 842 may include one or more of the silicon-containing filler, the silicon-containing filler, a high-temperature fusion agent, a lubricant, and a heat-reflective filler.

The silicon-containing filler may be coated at the surface of the compound layer or embedded in the resin 811. For example, the silicon-containing filler is sprayed on the surface of the compound layer, and then the silicon-containing filler is embedded in the resin 811 by hot pressing, where for example, first performing hot pressing, where a temperature is 120 °C to 160 °C, and hot-pressing time is 20 to 40 min, and then baking at 130 °C-180 °C for 1 to 3h after hot pressing. Alternatively, the silicon-containing filler is dispersed in the resin 811, and the resin dispersed with the silicon-containing filler is used for infiltration. A dosage of the silicon-containing filler is 40% to 70% of a volume. Normally, under an action of 1200 °C, the silicon-containing filler can begin to melt at the high temperature, and gasification of the silicon-containing filler can absorb a large amount of heat. The silicon-containing filler begins to melt and react with the carbon layer formed by the resin 811 to generate solid silicon carbide, and the solid silicon carbide can resist high-temperature erosion and high-temperature shear and extension or compression, can effectively improve the mechanical performance of the heat-resistant protective member 8, and prevent the heat-resistant protective member 8 from being broken through.

In some embodiments, the silicon-containing filler includes one or a combination of more of silica aerogel powder, quartz powder, mica powder, ceramic micro powder, white carbon black, wollastonite, montmorillonite, and talcum powder. The quartz powder includes silica micro powder. In a specific implementation, the silicon-containing filler includes silica aerogel powder and mica powder, and a mass ratio of the silica aerogel powder to the mica powder is 1:3 to 1:1. A silica aerogel is a porous material with mesopores, and has an extremely low thermal conductivity coefficient. When the heat-resistant protective member 8 is under the thermal impact, a temperature of the fire-facing surface of the heat-resistant protective member 8 is rapidly rising to form a steep temperature gradient, and the silica aerogel can delay the heat transfer from the fire-facing surface of the heat-resistant protective member 8 to the back fire surface. Under an action of a high temperature of 800 °C to 1000 °C, the silica aerogel powder is prone to shrinkage of a pore structure, and effect of delaying the heat transfer from the fire-facing surface of the heat-resistant protective member 8 to the back fire surface is weakened. In this case, the mica powder is used together with the silica aerogel. Mica has good heat resistance and thermal insulation. Although the mica becomes brittle at 800 °C to 1000 °C, a structure of the mica is not destroyed, and the mica can still maintain thermal insulation performance. The mica structure is destroyed at 1050 °C to 1100 °C. When a temperature of the fire-facing surface of the heat-resistant protective member 8 rises to 1200 °C, silicon begins to melt and react with the carbon layer of the resin to form the porous solid silicon carbide to resist the thermal impact, and reduce the heat transfer of the fire-facing surface to the back fire surface. This process can absorb a large amount of heat to further resist the thermal impact.

In some other embodiments, the silicon-containing filler includes silicon dioxide and aluminum oxide, where the aluminum oxide can improve temperature resistance of the silicon dioxide, and under an action of a high temperature of the thermal impact, the silicon dioxide can react with the carbon layer carbonized by the resin to form silicon carbide. A dosage of the silicon dioxide is 50 to 80 wt% of the silicon-containing filler, and a dosage of the aluminum oxide is 10 to 30 wt% of the silicon-containing filler.

In some embodiments, the filler 842 is the high-temperature fusion agent, that is, the heat-resistant protective member 8 further includes the high-temperature fusion agent. The high-temperature fusion agent has a low melting point, which helps the silicon-containing filler to melt or gasify to react with the carbon layer carbonized by the resin 811 to form solid silicon carbide. A dosage of the high-temperature fusion agent is 40% to 70% of the volume of the fiber matrix 810. The high-temperature fusion agent includes one or more of talcum powder, wollastonite, mica powder, kaolin, barium sulfate, and silica-alumina powder. The talcum powder may also be used as a lubricant, and helps molding of a composition. In some embodiments, the high-temperature fusion agent is coated at the surface of the compound layer or dispersed in the resin 811. For example, the high-temperature fusion agent is sprayed on the surface of the compound layer, and then the high-temperature fusion agent is embedded in the resin 811 by hot pressing. Alternatively, the high-temperature fusion agent is dispersed in the resin 811, and the resin 811 dispersed with the high-temperature fusion agent infiltrates the fiber matrix 810.

In an embodiment that includes the silicon-containing filler, the filler 842 also includes the high-temperature fusion agent. That is, the heat-resistant protective member 8 includes the silicon-containing filler and the high-temperature fusion agent, where the dosage of the high-temperature fusion agent is 10 wt% to 40 wt% of the silicon-containing filler, such as 10 wt%, 15 wt%, 20 wt%, 25 wt%, 30 wt%, 35 wt%, or 40 wt%. The high-temperature fusion agent includes one or more of the talcum powder, the wollastonite, the mica powder, the kaolin, the barium sulfate, and the silica-alumina powder. It should be noted that a material of the high-temperature fusion agent is different from a material of the silicon-containing filler. In some embodiments, the high-temperature fusion agent is coated at the surface of the compound layer or dispersed in the resin 811. For example, the silicon-containing filler and the high-temperature fusion agent are mixed and sprayed or sequentially sprayed on the surface of the compound layer, and then the silicon-containing filler and the high-temperature fusion agent are embedded in the resin 811 by hot pressing, where for example, first performing hot pressing, where a temperature is 120 °C to 160 °C, and hot pressing time is 20 to 40 min, and then baking at 130 °C to 180 °C for 1 to 3h after hot pressing. Alternatively, the silicon-containing filler and the high-temperature fusion agent are both dispersed in the resin 811, and the resin 811 dispersed with the silicon-containing filler and the high-temperature fusion agent infiltrate the fiber matrix 810.

In some embodiments, the filler 842 further includes the lubricant, that is, the heat-resistant protective member 8 further includes the lubricant for helping molding of the composition. The lubricant includes one or a combination of several of polyamide wax, polyethylene wax, and paraffin, can increase lubricity of the fiber matrix 810 and the filler 842 in the resin 811, and is used to better mold the composition. That is, the heat-resistant protective member 8 includes the silicon-containing filler and the lubricant, where a dosage of the lubricant is 10 wt% to 40 wt% of the silicon-containing filler, such as 10 wt%, 15 wt%, 20 wt%, 25 wt%, 30 wt%, 35 wt%, or 40 wt%.

Optionally, in some embodiments, the filler 842 is the heat-reflective filler, that is, the heat-resistant protective member 8 further includes the heat-reflective filler, and a dosage of the heat-reflective filler is 0 to 5 wt% of the heat-resistant protective member 8. In some other embodiments, for example, the filler 842 includes the silicon-containing filler and the heat-reflective filler, that is, the heat-resistant protective member 8 includes the silicon-containing filler and the heat-reflective filler, and a dosage of the heat-reflective filler is 5 to 30 wt% of the silicon-containing filler. The heat-reflective filler may be coated at the surface of the compound layer or dispersed in the resin 811. For details, refer to the manner of adding the silicon-containing filler or the high-temperature fusion agent. The heat-reflective filler generally has a characteristic of a high melting point and can reduce heat transfer. The heat-reflective filler includes one or more of oxides or nitrides of titanium, iron, aluminum, zinc, lanthanum, and cerium, which can be selected based on a requirement.

Further, in some embodiments, the heat-resistant protective member 8 further includes a colorant, and the colorant is used for adjusting an appearance of the heat-resistant protective member 8 to ensure consistency of the appearance of the heat-resistant protective member 8. The colorant includes one or more of carbon black, titanium white, iron black, oil-based color concentrate, and transition metal coloring ion oxides. The transition metal may be one or more of iron, chromium, copper, and nickel.

In some specific implementations, the heat-resistant protective member 8 further includes a gas absorbent, and the gas absorbent is arranged on the surface of the compound layer 81 to form a gas absorbent layer 82, as shown in FIG. 17, or embedded in the resin 811, and is used for absorbing a combustible gas ejected from a pressure relief valve of a cell, and delays the thermal runaway of the battery. A dosage of the gas absorbent is 0 to 10 wt% of the heat-resistant protective member 8. The gas absorbent may be one or more of one or more of a carbon molecular sieve, a zeolite sieve, graphene, talcum powder, and aluminum oxide.

Further, the gas absorbent layer 82 is arranged on the fire-facing surface of the heat-resistant protective member 8, and is used for absorbing the combustible gas ejected from the pressure relief valve of the cell and delaying the thermal runaway of the battery. The gas absorbent layer 82 includes a housing and the gas absorbent within the housing. For example, the housing of the gas absorbent layer 82 is capped by the fiber resin compound layer.

Optionally, in some embodiments, refer to FIG. 18. The heat-resistant protective member 8 further includes a heat insulation layer 83, and the heat insulation layer 83 is arranged with the fiber resin compound layer 81 in a stacked manner. In a specific implementation, the heat insulation layer 83 is arranged on the back fire surface of the heat-resistant protective member 8, and is used for blocking transfer of a temperature of the fire-facing surface of the heat-resistant protective member 8 to a temperature of the back fire surface. The heat insulation layer 83 includes an aerogel coating or an aerogel felt, where the aerogel coating is more space-saving, and the aerogel felt may be more firmly arranged on the compound layer.

Specifically, the aerogel coating is formed by brushing with an aerogel slurry and drying, and the aerogel slurry includes 10 to 50 parts of aerogel powder, 20 to 50 parts of adhesive, 1 to 5 parts of dispersant, 50 to 80 parts of solvent, and 1 to 5 parts of film-forming additive. The aerogel powder provides heat insulation performance for the aerogel coating. The adhesive provides stickiness of the slurry and ensures film formation of a dried final coating. The dispersant is used for dispersion of the aerogel powder to prevent agglomeration of the aerogel powder. The solvent is used to adjust viscosity of the slurry to facilitate the dispersion of the aerogel powder. The film-forming additive is used to help the adhesive dry and form a film, to prevent the aerogel powder in the aerogel coating from falling off.

Further, the adhesive is one or more of silica sol, aluminum sol, sodium water glass, polyurethane, an epoxy resin, acrylic emulsion, latex powder, modified starch, polyvinyl alcohol, and polyvinylpyrrolidone. The dispersant is one or more of sodium pyrophosphate, sodium polyacrylate, sodium hexametaphosphate, stearamide, sorbeth tetraoleate, cellulose, and polyethylene glycol. The film-forming additive is one or more of benzyl alcohol, ethylene glycol butyl ether, propylene glycol phenyl ether, and alcohol ester-12.

Refer to FIG. 19. Some embodiments of this application provide a heat-resistant protective member 8, and the heat-resistant protective member 8 includes a functional layer 84. The functional layer 84 includes a first resin 841 and a filler 842 dispersed in the first resin 841. After the first resin 841 and the filler 842 are mixed evenly to form a composition, the first resin 841 is cured to form the functional layer 84. That is, the functional layer 84 is a compound layer of the resin and the filler 842.

In some embodiments, a mass content of a carbon element in the first resin 841 is greater than 40%, and preferably, the mass content of the carbon element in the first resin 841 is greater than 50%. Upon thermal impact, the first resin 841 can carbonize and absorb heat to form a carbon layer to resist thermal penetration. The first resin 841 may include one or a combination of more of a phenolic resin, a benzoxazine resin, a furan resin, polyurea, and a phenolic modified epoxy resin.

Optionally, in some embodiments, a first viscosity regulator is dispersed in the first resin 841, and the viscosity regulator can reduce viscosity of a high-viscosity resin. This facilitates infiltration, penetration, and production processing of the resin and the fiber into an even product. Reducing the viscosity of the first resin 841 facilitates addition of the filler 842, for example, a functional material such as a silica-containing particle or a chopped fiber. A dosage of the first viscosity regulator is 1% to 10% of a volume of the first resin 841. When the dosage of the first viscosity regulator is less than 1% of the volume of the first resin 841, the first resin 841 has high viscosity and poor fluidity, and it is difficult to form a product with an even thickness. When the dosage of the first viscosity regulator is higher than 10% of the volume of the first resin 841, low viscosity and strong fluidity cause a solvent in the first resin 841 to volatilize during processing and molding of the composition, resulting in pore defects in a product. Further, the first viscosity regulator includes one or a combination of more of methanol, ethanol, ethyl acetate, acetone, and butanone, to reduce the viscosity of the first resin 841.

Optionally, in some embodiments, a first curing agent is dispersed in the first resin 841. The first curing agent can effectively shorten curing time of the first resin 841, which is conducive to large-scale and batch production of heat-resistant protective members 8. Methenamine is used as a first curing agent in the phenolic resin, and a dosage of the methenamine is 2.5% to 3% of mass of the phenolic resin; and a phosphoric acid curing agent is used as a first curing agent in the furfural acetone resin, and a dosage of the phosphoric acid curing agent is 6% to 7% of mass of the furfural acetone resin. It should be noted that the benzoxazine resin, the furan resin, and the polyurea do not use curing agents.

Optionally, in some embodiments, a first flame retardant is dispersed in the first resin 841, and a dosage of the first flame retardant is 5% to 40% of mass of the first resin 841. The flame retardant is one or more of ammonium polyphosphate, aluminum hydroxide, or 9,10-dihydro-9-oxa-10-phosphaphenanthrene-10-oxide (DOPO).

In some embodiments, the filler 842 is a chopped fiber, and a volume percent of the chopped fiber in the functional layer 84 is 50% to 80%. The chopped fiber includes one or more of a carbon fiber, a silicon carbide fiber, a silicon nitride fiber, a quartz fiber, an aluminum silicate fiber, an asbestos fiber, a high silica fiber, a boro-carbon fiber, and a carbon nanotube.

In some other embodiments, the filler 842 is a first heat-reflective filler, and a volume percent of the first heat-reflective filler in the functional layer 84 is 45% to 75%; and the first heat-reflective filler includes one or more of oxides or nitrides of titanium, iron, aluminum, zinc, lanthanum, and cerium.

Optionally, in some other embodiments, the filler 842 includes a first silicon-containing filler, and a weight ratio of the first resin 841 and the first silicon-containing filler is 1:3 to 1:1. Normally, the silicon-containing filler begins to melt at a high temperature of 1200 °C, and after the silicon-containing filler melts at the high temperature, integrity of the heat-resistant protective member 8 can be increased and flame impact resistance strength can be improved. Melting and gasification of the silicon-containing filler can absorb a large amount of heat, the silicon-containing filler reacts with the carbon layer formed by the resin to generate solid silicon carbide, and the solid silicon carbide can resist high-temperature erosion and high-temperature shear and extension or compression, can effectively improve mechanical performance of the heat-resistant protective member 8, and prevent the heat-resistant protective member 8 from being broken through.

In a specific implementation, the filler 842 includes a chopped fiber and the first silicon-containing filler. The chopped fiber includes one or more of a carbon fiber, a silicon carbide fiber, a silicon nitride fiber, a quartz fiber, an aluminum silicate fiber, an asbestos fiber, a high silica fiber, a boro-carbon fiber, and a carbon nanotube. A dosage of the chopped fiber is 0 to 15 wt% of the first silicon-containing filler. The chopped fiber has a length of 0.05 to 30 mm, and a diameter of 1 to 15 µm.

Optionally, in some embodiments, the first silicon-containing filler includes one or a combination of more of silica aerogel powder, quartz powder, mica powder, ceramic micro powder, white carbon black, wollastonite, montmorillonite, and talcum powder. In a specific implementation, main ingredients of the ceramic micro powder are silicon oxide and aluminum oxide, the aluminum oxide improves temperature resistance of the ceramic micro powder, and under an action of a high temperature of the thermal impact, the silicon dioxide reacts with the carbon layer carbonized by the resin to form silicon carbide.

Optionally, in some other embodiments, the first silicon-containing filler includes silica aerogel powder and mica powder, and a mass ratio of the silica aerogel powder to the mica powder is 1:3 to 1:1. Under the thermal impact, a temperature of a fire-facing surface of the heat-resistant protective member 8 is rapidly rising to form a steep temperature gradient. Silica aerogel is a porous material with mesopores, and has an extremely low thermal conductivity coefficient. The silica aerogel can delay heat transfer from the fire-facing surface of the heat-resistant protective member 8 to a back fire surface. Under an action of a high temperature of 800 °C to 1000 °C, the silica aerogel is prone to shrinkage of a pore structure, and effect of delaying the heat transfer from the fire-facing surface of the heat-resistant protective member 8 to the back fire surface is weakened. Mica is used together with the silica aerogel. The mica has good heat resistance and thermal insulation. Although the mica becomes brittle at 800 °C to 1000 °C, a structure of the mica is not destroyed, and the mica can still maintain thermal insulation performance. The mica structure is destroyed at 1050 °C to 1100 °C. When a temperature of the fire-facing surface of the heat-resistant protective member 8 rises to 1200 °C, silicon in the first silicon-containing filler reacts with the carbon layer of the resin to form the porous solid silicon carbide to resist the thermal impact, and reduce the heat transfer from the fire-facing surface to the back fire surface. This process can absorb a large amount of heat to further resist the thermal impact.

Optionally, in some other embodiments, the first silicon-containing filler includes silicon dioxide and aluminum oxide; and a dosage of the silicon dioxide is 50 to 80 wt% of the first silicon-containing filler, and a dosage of the aluminum oxide is 10 to 30 wt% of the first silicon-containing filler.

Optionally, in some embodiments, the filler 842 includes the first silicon-containing filler and a first high-temperature fusion agent, where a dosage of the first high-temperature fusion agent is 10 wt% to 40 wt% of the first silicon-containing filler. A material of the first high-temperature fusion agent is different from a material of the first silicon-containing filler. The first high-temperature fusion agent has a low melting point, which helps the first silicon-containing filler to melt or gasify to react with the carbon layer carbonized by the resin to form solid silicon carbide. The first high-temperature fusion agent includes one or more of talcum powder, wollastonite, mica powder, kaolin, barium sulfate, and silica-alumina powder.

Optionally, in some embodiments, the filler 842 includes the first silicon-containing filler and a first lubricant, and the first lubricant helps molding of the composition. A dosage of the first lubricant is 10 wt% to 40 wt% of the first silicon-containing filler. The first lubricant includes one or a combination of more of polyamide wax, polyethylene wax, paraffin, and talcum powder. The polyamide wax, the polyethylene wax, and the paraffin can increase lubricity of the filler 842 in the resin, and help mold the composition, but weaken a softening point of the composition, and then reduce heat resistance performance of the heat-resistant protective member 8. Therefore, a content of the first lubricant should not be too high.

Optionally, in some embodiments, the filler 842 includes the first silicon-containing filler and a first heat-reflective filler, where the first heat-reflective filler has a characteristic of a high melting point and can reduce heat transfer. A dosage of the first heat-reflective filler is 0 to 5 wt% of the first silicon-containing filler. The first heat-reflective filler includes one or more oxides or nitrides of titanium, iron, aluminum, zinc, lanthanum, and cerium.

Optionally, in some embodiments, the functional layer 84 further includes a first ceramic precursor. The first ceramic precursor includes one or more of a polysilazane resin, a polyborosilazane resin, and a polycarbosilane resin. Under an action of the thermal impact, the polysilazane resin and the polyborosilazane resin can generate ceramic materials such as SiCN and SiCNO, which can increase temperature resistance and the flame impact resistance strength of the heat-resistant protective member 8. The first ceramic precursor can be mixed with the first resin 841 and the filler 842 and cured to form a function, or may be coated on a surface of the compound layer of the first resin 841 and the filler 842. On one hand, the ceramic precursor causes bending strength of the heat-resistant protective member to reduce at a room temperature, and on the other hand, the ceramic precursor reacts at a high temperature to generate the ceramic material, which does not reduce the temperature resistance and the flame impact resistance strength of the heat-resistant protective member 8. In an embodiment, a ratio of a volume of the first ceramic precursor to a sum of volumes of the first ceramic precursor and the first resin 841 is less than 50%, or a ratio of mass of the first ceramic precursor to a sum of the mass of the first ceramic precursor and the mass of the first resin 841 is less than 50%, thereby ensuring that the heat-resistant protective member has good bending strength at the room temperature while controlling costs of the heat-resistant protective member 8, so that a market competitive advantage of the heat-resistant protective member 8 is maintained while the temperature resistance and the flame impact resistance strength of the heat-resistant protective member 8 are improved.

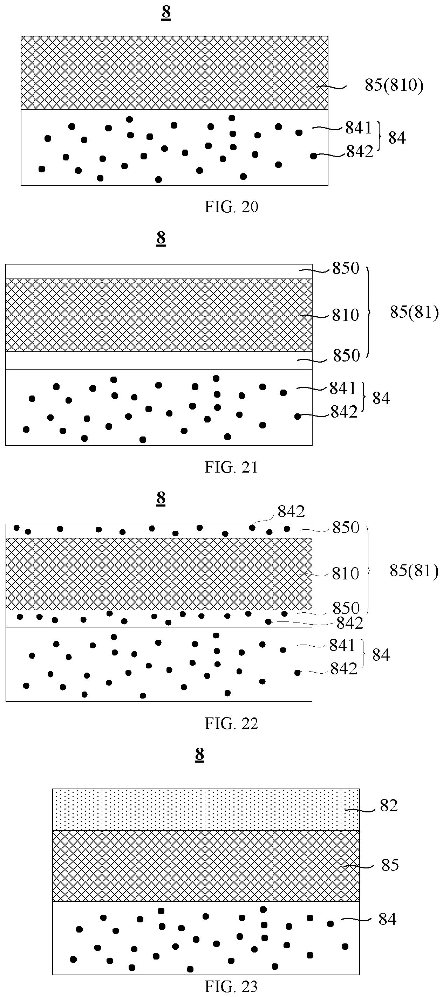

Further, in some embodiments, refer to FIG. 20 and FIG. 21. The heat-resistant protective member 8 further includes a reinforcing layer 85 arranged with the functional layer 84 in a stacked manner. The first resin 841 of the functional layer 84 penetrates into the reinforcing layer 85 through hot pressing, so that the first resin is bonded and cured with the reinforcing layer 85 for composition, and the reinforcing layer 85 is used for room-temperature mechanical reinforcement of the functional layer 84.

In some embodiments, refer to FIG. 20. The reinforcing layer 85 is a fiber matrix 810, that is, a pure fiber matrix 810 is used as the reinforcing layer 85. Further, the fiber matrix 810 may be arranged with the functional layer 84 in a stacked manner, and a part of the first resin 841 of the functional layer 84 may penetrate into the fiber matrix 810 through hot pressing. Because a depth of penetration by the first resin 841 through hot pressing is limited, a thickness of the pure fiber matrix 810 should not be too large. In an embodiment, a thickness range of the pure fiber matrix 810 is < 0.2 mm, so that the first resin 841 in the functional layer 84 can infiltrate into the entire pure fiber matrix 810 during the hot pressing.

The fiber matrix 810 includes fiber cloth and/or fiber felt. Fibers of the fiber matrix 810 include one or more of a carbon fiber, a silicon carbide fiber, a silicon nitride fiber, a quartz fiber, an aluminum silicate fiber, an asbestos fiber, a high silica fiber, a boro-carbon fiber, and a carbon nanotube. The fiber cloth and/or fiber felt are used for room-temperature mechanical reinforcement of the functional layer 84. The fiber cloth is one or more of a fiber twill fabric, a fiber satin fabric, a fiber uniaxial fabric, and a fiber multiaxial fabric. The fiber twill fabric is that warps and wefts interweave once at an interval of at least two pieces of yarn, and warp and weft interweaving points are added to change a fabric construction structure. Warps or wefts of the fiber satin fabric form some separate and unconnected warp or weft construction points in the fabric, a cloth surface is almost all covered with the warps or wefts, the surface seems to have oblique lines but does not have obvious oblique lines like twills, the warps and wefts interweave less times, the appearance is smooth and bright, and a texture is softer. The fiber uniaxial fabric is formed by lining the fabric with yarn in a transverse or longitudinal direction, has high fiber continuity and linearity, and is a typical anisotropic material with good crimpness along a direction perpendicular to the yarn. The fiber multiaxial fabric includes warps, lining, and braided yarn, the warps and wefts do not interweave, and two parallel yarn sheets are formed and perpendicularly arranged, and then bundled together by the braided yarn. Because there is no fiber or only a chopped fiber in the functional layer 84, the heat-resistant protective member 8 prepared with the large-size functional layer 84 may crack or break in environments of transportation at a room temperature and thermal impact. The reinforcing layer 85 reinforces the mechanical performance of the functional layer 84, and improves room-temperature mechanical performance and thermal impact resistance performance of the heat-resistant protective member 8. When the heat-resistant protective member 8 is used, the reinforcing layer 85 is used as the fire-facing surface, and under the action of the thermal impact, the reinforcing layer 85 ablates and absorbs heat to resist the thermal impact for the functional layer 84.

It can be understood that if there is only the functional layer 84, namely, the compound layer of the first resin 841 and the filler 842, a formed heat-resistant protective member 8 has poor impact resistance performance, and can be used in a small battery cell. The heat-resistant protective member 8 formed by arranging the functional layer 84 and the reinforcing layer 85 in a stacked manner has high thermal impact resistance performance, and can be used in a large battery cell. Specifically, selection may be performed based on an actual requirement.

Optionally, in some other embodiments, refer to FIG. 21. The reinforcing layer 85 includes a fiber matrix 810 and a second resin 850, and the second resin 850 is dispersed in pores of the fiber matrix 810 and/or a surface of the fiber matrix 810 to form a compound layer, and a volume percent of the fiber matrix 810 is 50% to 75% in the reinforcing layer 85. That is, the reinforcing layer 85 adopts the fiber resin compound layer 81 provided in the above implementations. Further, a quantity of layers of fiber cloth and/or fiber felt in the fiber matrix 810 may be one, two, or more, and the fiber cloth and/or fiber felt of two or more layers are arranged in a stacked manner and bonded and cured by using the second resin 850. The second resin 850 includes one or a combination of more of a phenolic resin, a benzoxazine resin, a furan resin, polyurea, and a phenolic modified epoxy resin, and a mass content of a carbon element in the second resin 850 is greater than 40%. The reinforcing layer 85 including the second resin 850 is compounded with the functional layer 84 including the first resin 841, so that the resin 811 in the reinforcing layer 85 and the functional layer 84 can be distributed more evenly and sufficiently, the reinforcing layer 85 impregnated with the second resin 850 is used as the fire-facing surface, and the second resin 850 absorbs heat and carbonizes to resist heat penetration and protects the functional layer 84.

Further, a thickness ratio of the functional layer 84 and the reinforcing layer 85 is (8-10):(1-4), the reinforcing layer 85 may be used as the fire-facing surface to ablate to protect the functional layer 84, and the functional layer 84 provides main impact resistance performance for the heat-resistant protective member 8. Further, the heat-resistant protective member 8 includes two reinforcing layers 85, namely, a first reinforcing layer and a second reinforcing layer, which are respectively arranged on two opposite sides of the functional layer 84 to form a sandwich structure. A thickness ratio of the first reinforcing layer, the functional layer 84, to the second reinforcing layer is (1-2):(8-10):(1-2), to improve symmetry of mechanical performance of the two opposite sides of the heat-resistant protective member 8. In the heat-resistant protective member 8, under the action of the thermal impact, the first reinforcing layer as the fire-facing surface carbonizes and ablates to absorb heat, and the second reinforcing layer as the back fire surface can maintain structural integrity of the functional layer 84.

Optionally, in some embodiments, a second viscosity regulator is dispersed in the second resin 850, and a dosage of the second viscosity regulator is 1% to 10% of a volume of the second resin 850. Optionally, in some embodiments, a second curing agent is dispersed in the second resin 850. Optionally, in some embodiments, a second flame retardant is dispersed in the second resin 850, and a dosage of the second flame retardant is 5% to 40% of mass of the second resin 850. The second viscosity regulator, the second curing agent, and the second flame retardant have similar materials and/or ingredients as the first viscosity regulator, the first curing agent, and the first flame retardant in the above embodiments respectively. For details, refer to the above embodiments. Details are not described herein again.

Optionally, in some embodiments, a phase-change material is also dispersed in the second resin 850, and a dosage of the phase-change material is 5% to 20% of a volume of the fiber matrix 810. The phase-change material can absorb heat to resist the thermal impact and can reduce heat transfer from the fire-facing surface to the back fire surface. To avoid bubbles, between the functional layer 84 and the reinforcing layer 85 and within the functional layer 84, produced due to thermal decomposition of the phase-change material under the action of the thermal impact, which significantly accelerates ablation of the functional layer 84, and affects the thermal impact resistance performance of the heat-resistant protective member 8, the phase-change material is added for use only within the reinforcing layer 85. Further, the phase-change material uses hydrated salt components.

Optionally, in some embodiments, the reinforcing layer 85 further includes a second ceramic precursor. The second ceramic precursor includes one or more of a polysilazane resin 811, a polyborosilazane resin 811, and a polycarbosilane resin 811. Under the action of the thermal impact, ceramic materials such as SiCN and SiCNO can be generated, which can increase temperature resistance and the flame impact resistance strength of the heat-resistant protective member 8. In some embodiments, a mixture of the second resin 850 and the second ceramic precursor is dispersed in the pores of the fiber matrix 810 and/or covers two opposite surfaces of the fiber matrix 810. Optionally, in some other embodiments, the second ceramic precursor is coated at one surface of the fiber resin compound layer or on two opposite surfaces of the fiber resin compound layer. On one hand, the ceramic precursor causes bending strength of the heat-resistant protective member to reduce at the room temperature, and on the other hand, the ceramic precursor reacts at a high temperature to generate the ceramic material, which does not reduce the temperature resistance and flame impact resistance strength of the heat-resistant protective member 8. In an embodiment, a ratio of a volume of the second ceramic precursor to a sum of volumes of the second ceramic precursor and the second resin 850 is less than 50%, or a ratio of mass of the second ceramic precursor to a sum of the mass of the second ceramic precursor and the mass of the second resin 850 is less than 50%, thereby ensuring that the heat-resistant protective member has good bending strength at the room temperature while controlling costs of the heat-resistant protective member 8, so that a market competitive advantage of the heat-resistant protective member 8 is maintained while the temperature resistance and the flame impact resistance strength of the heat-resistant protective member 8 are improved.

Optionally, in some embodiments, the fiber matrix 810 includes a first fiber matrix and a second fiber matrix. The second resin 850 is dispersed in pores of the first fiber matrix and/or covers two opposite surfaces of the first fiber matrix to form a first compound layer. The second ceramic precursor is dispersed in pores of the second fiber matrix and/or covers two opposite surfaces of the second fiber matrix to form a second compound layer. In a specific implementation, the first compound layer and the second compound layer are arranged in a stacked manner to form a stacked structure. In another specific implementation, two first compound layers sandwich at least one second compound layer to form a stacked structure. Optionally, in another specific implementation, two second compound layers sandwich at least one first compound layer to form a stacked structure. In another specific implementation, a plurality of first compound layers and a plurality of second compound layers are alternately arranged in a stacked manner.

Optionally, in some embodiments, refer to FIG. 22. The reinforcing layer 85 includes a fiber matrix 810, a second resin 850, and a filler 842, and the filler 842 includes one or more of a second silicon-containing filler, a second high-temperature fusion agent, a second lubricant, and a second heat-reflective filler.

In some embodiments, the filler 842 is the second silicon-containing filler, and a volume of the second silicon-containing filler accounts for 40% to 70% of a volume of the fiber matrix 810. The second silicon-containing filler may be coated on the surface of the fiber resin compound layer 81 or embedded in the second resin 850. The second silicon-containing filler includes one or a combination of more of silica aerogel powder, quartz powder, mica powder, ceramic micro powder, white carbon black, wollastonite, montmorillonite, and talcum powder. In a specific implementation, the second silicon-containing filler includes silica aerogel powder and mica powder, and a mass ratio of the silica aerogel powder to the mica powder is 1:3 to 1:1. In another implementation, the second silicon-containing filler includes silicon dioxide and aluminum oxide; and a dosage of the silicon dioxide is 50 to 80 wt% of the second silicon-containing filler, and a dosage of the aluminum oxide is 10 to 30 wt% of the second silicon-containing filler. The second silicone filler is coated at the surface of the compound layer or embedded in the second resin 850.

Optionally, in some embodiments, the filler 842 includes the second silicon-containing filler and the second high-temperature fusion agent, that is, the reinforcing layer 85 includes the second silicon-containing filler and the second high-temperature fusion agent, and a dosage of the second high-temperature fusion agent is 10 wt% to 40 wt% of the second silicon-containing filler. The second high-temperature fusion agent includes one or more of talcum powder, wollastonite, mica powder, kaolin, barium sulfate, and silica-alumina powder. A material of the second high-temperature fusion agent is different from a material of the second silicon-containing filler.

Optionally, in some embodiments, the reinforcing layer 85 includes the second silicon-containing filler and the second lubricant, and a dosage of the second lubricant is 10 to 40 wt% of the second silicon-containing filler. The second lubricant includes a combination of one or several of polyamide wax, polyethylene wax, and paraffin.

Optionally, in some embodiments, the filler 842 includes the second silicon-containing filler and the second heat-reflective filler, that is, the reinforcing layer 85 includes the second silicon-containing filler and the second heat-reflective filler, and a dosage of the second heat-reflective filler is 5 to 30 wt% of the second silicon-containing filler. The second heat-reflective filler includes one or more oxides or nitrides of titanium, iron, aluminum, zinc, lanthanum, and cerium.

Optionally, in some embodiments, the reinforcing layer 85 includes the fiber matrix 810, the second resin 850, and a colorant, and the colorant includes one or more of carbon black, titanium white, iron black, oil-based color concentrate, and transition metal coloring ion oxides.

Optionally, in some embodiments, the heat-resistant protective member 8 also includes a gas absorbent. The gas absorbent fills the functional layer 84 and/or the reinforcing layer 85, or the gas absorbent is arranged between the functional layer 84 and the reinforcing layer 85 to form a gas absorbent layer 82. The gas absorbent is used as the filler 842 and fills the functional layer 84 and/or the reinforcing layer 85 of the heat-resistant protective member 8, and is used for absorbing a combustible gas ejected from a pressure relief valve of a cell to delay thermal runaway of a battery. The gas absorbent is one or more of one or more of a carbon molecular sieve, a zeolite sieve, graphene, talcum powder, and aluminum oxide. In some embodiments, refer to FIG. 23. The gas absorbent layer 82 is arranged on one side of the reinforcing layer 85 away from the functional layer 84, and the gas absorbent layer 82 includes a housing and a gas absorbent in the housing.

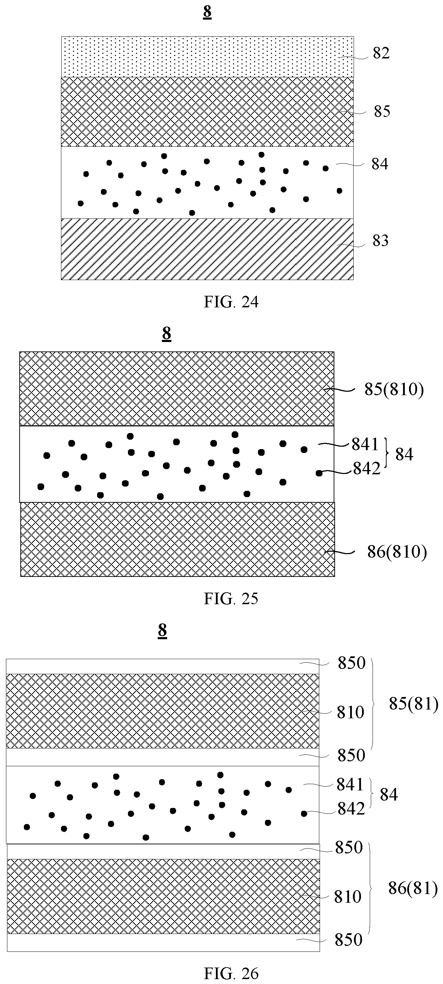

Optionally, in some embodiments, refer to FIG. 24. The heat-resistant protective member 8 further includes a heat insulation layer 83, and the heat insulation layer 83 is arranged on one side of the functional layer 84 away from the reinforcing layer 85, and is used for blocking transfer of a temperature of the fire-facing surface of the heat-resistant protective member 8 to a temperature of the back fire surface. The heat insulation layer 83 includes an aerogel coating or aerogel felt. The aerogel coating is more space-saving, and the aerogel felt can be more firmly arranged on the compound layer. Specifically, the aerogel coating is formed by brushing with an aerogel slurry and drying. For details, refer to the above aerogel coating.

Refer to FIG. 25 and 26. Some embodiments of this application provide a heat-resistant protective member 8. The heat-resistant protective member 8 includes a reinforcing layer 85, a functional layer 84, and a strengthening layer 86 that are sequentially arranged from a fire-facing surface to a back fire surface. The functional layer 84 includes a first resin 841 and a filler 842 dispersed in the first resin 841. The reinforcing layer 85 and the strengthening layer 86 each include a fiber matrix 810.

The functional layer 84 is arranged between the reinforcing layer 85 and the strengthening layer 86. In some embodiments, refer to FIG. 25. The reinforcing layer 85 and the strengthening layer 86 each include only the fiber matrix 810, that is, the reinforcing layer 85 and the strengthening layer 86 each are the pure fiber matrix 810. The first resin 841 penetrates into the reinforcing layer 85 and the strengthening layer 86 under an action of hot pressing, so that the functional layer 84 is bonded and cured with the reinforcing layer 85 and the strengthening layer 86 for composition. In some other embodiments, refer to FIG. 26. The reinforcing layer 85 and/or the strengthening layer 86 include/includes the fiber matrix 810 and a second resin 850, that is, the reinforcing layer 85 and/or the strengthening layer 86 adopt the fiber resin compound layer provided in the above implementation. The functional layer 84 adopts the compound layer of the resin and the filler provided in the above implementation. The first resin 841 in the functional layer 84 and the second resin 850 in the reinforcing layer 85 and/or the strengthening layer 86 can be fused, bonded, cured, and compounded with each other under an action of hot pressing. Structures of the reinforcing layer 85 and the strengthening layer 86 are the same, but a melting point of the fiber matrix 810 of the strengthening layer 86 may be higher than that of the fiber matrix 810 of the reinforcing layer 85, or may be the same as that of the fiber matrix 810 of the reinforcing layer 85. Materials of the fiber matrix 810 of the strengthening layer 86 and the fiber matrix 810 of the reinforcing layer 85 may be the same or different.

It can be understood that costs of the fiber matrix 810 with a high melting point are usually higher than that of the fiber matrix 810 with a low melting point. To control costs, in an embodiment of this application, the fiber matrix 810 with the high melting point is used only on the back fire surface, and the fiber matrix 810 with the low melting point is used on the fire-facing surface. In another embodiment of this application, alternatively, fiber matrices 810 with high melting points may be both used on the fire-facing surface and the back fire surface of the functional layer 84, or fiber matrices 810 with low melting points may be both used. In this application, a fiber material of the fiber matrix 810 with the low melting point includes one or more of a high silica fiber, a quartz fiber, a glass fiber, and a basalt fiber. A fiber material of the fiber matrix 810 with the high melting point includes one or more of a carbon fiber, a silicon carbide fiber, a silicon nitride fiber, a quartz fiber, an aluminum silicate fiber, an asbestos fiber, a high silica fiber, and a boro-carbon fiber.

The first resin 841 is used for, upon thermal impact, carbonizing and absorbing heat to form a carbon layer to resist thermal penetration. A mass content of a carbon element in the first resin 841 is greater than 40%, for example, 42%, 45%, 50%, 55%, 60%, 65%, or 70%. The first resin 841 may include one or a combination of more of a phenolic resin 811, a benzoxazine resin 811, a furan resin 811, polyurea, and a phenolic modified epoxy resin 811. Specifically, selection can be performed based on a requirement.

Further, in some embodiments, a first viscosity regulator is dispersed in the first resin 841, and the first viscosity regulator is used for reducing viscosity of the high-viscosity first resin 841. This facilitates infiltration, penetration, and production processing of the first resin 841 and the fiber matrix 810 into an even product. In this embodiment of this application, a dosage of the first viscosity regulator is 1% to 10% of a volume of the first resin 841, for example, 1%, 5%, 7%, or 10%. When the dosage of the first viscosity regulator is less than 1% of the volume of the first resin 841, the first resin 841 has high viscosity and poor fluidity, and it is difficult to form a product with an even thickness. When the dosage of the first viscosity regulator is higher than 10% of the volume of the first resin 841, the first resin 841 has low viscosity and strong fluidity, which causes a solvent in the first resin 841 to volatilize during processing and molding of the composition, resulting in pore defects in a product. In a specific implementation, the first viscosity regulator includes one or a combination of more of methanol, ethanol, ethyl acetate, acetone, and butanone.

Further, in some embodiments, a first curing agent can be dispersed in the first resin 841, and the first curing agent can effectively shorten the curing time of the first resin 841, which is conducive to large-scale and batch production of heat-resistant protective members 8. When the first resin 841 is the phenolic resin, methenamine is used as the first curing agent, and a dosage of the methenamine is 2.5% to 3% of mass of the phenolic resin. When the first resin 841 is the furfural acetone resin, a phosphoric acid curing agent is used as the first curing agent, and a dosage of the phosphoric acid curing agent is 6% to 7% of mass of the furfural acetone resin. In addition, when the first resin 841 is the benzoxazine resin, the furan resin, or the polyurea, no curing agent is used.

Further, in some embodiments, a first flame retardant is dispersed in the first resin 841, and a dosage of the first flame retardant is 5% to 40% of mass of the first resin 841, for example, 5%, 10%, 15%, 20%, 25%, 30%, 35%, or 40%. The first flame retardant is one or more of ammonium polyphosphate, aluminum hydroxide, or DOPO. The ammonium polyphosphate is heated and dehydrated under a high temperature condition to generate polyphosphoric acid or metaphosphoric acid that can be used as a strong dehydrating agent for generating a dehydration action with carbon-forming substances in a flame-retardant system to form an elemental carbon layer. Under an action of a non-combustible gas generated by a gas source, an expanded carbon layer is formed to isolate the air, block a fire source, and achieve the purpose of flame retardant. When being heated, the aluminum hydroxide has a strong heat absorption reaction, absorbs a large amount of heat, and can cool a polymer; and is decomposed, releases crystalline water that absorbs heat and generates water vapor to release a combustible gas, which further inhibits the spread of combustion. When being heated, a DOPO flame retardant has a strong heat absorption reaction, which prevents the spread of combustion and also improves a heat capacity of a polymer.

Further, in some embodiments, the filler 842 is a first chopped fiber, and the first chopped fiber is dispersed in the first resin 841, which can increase strength evenness of the functional layer 84. A volume percent of the first chopped fiber in the functional layer 84 is 50% to 80%, for example, 50%, 55%, 60%, 65%, 70%, 75%, or 80%. The first chopped fiber includes one or more of a carbon fiber, a silicon carbide fiber, a silicon nitride fiber, a quartz fiber, an aluminum silicate fiber, an asbestos fiber, a high silica fiber, a boro-carbon fiber, and a carbon nanotube.

In some other embodiments, the filler 842 is a first heat-reflective filler, and a volume percent of the first heat-reflective filler in the functional layer 84 is 45-75%, for example, 45%, 50%, 55%, 60%, 65%, 70%, or 75%. The first heat-reflective filler includes one or more oxides or nitrides of titanium, iron, aluminum, zinc, lanthanum, and cerium. The first heat-reflective filler generally has a high melting point and can reduce heat transfer.

In some other embodiments, the filler 842 includes a first silicon-containing filler, and a weight ratio of the first resin 841 to the first silicon-containing filler is 1:3 to 1:1, for example, 1:3, 1:2, 2:3, or 1:1. Normally, the first silicon-containing filler begins to melt at a high temperature of 1200 °C, gasification of the first silicon-containing filler can absorb a large amount of heat, the first silicon-containing filler reacts with the carbon layer formed by the first resin 841 to generate solid silicon carbide, and the solid silicon carbide can resist high-temperature erosion and high-temperature shear and extension or compression, can effectively improve mechanical performance of the heat-resistant protective member 8, and prevent the heat-resistant protective member 8 from being broken through.

The first silicon-containing filler includes one or a combination of more of silica aerogel powder, quartz powder, mica powder, ceramic micro powder, white carbon black, wollastonite, montmorillonite, and talcum powder. Main ingredients of the ceramic micro powder are silicon oxide and aluminum oxide, the aluminum oxide improves temperature resistance of the ceramic micro powder, and under an action of a high temperature of the thermal impact, the silicon dioxide reacts with the carbon layer carbonized by the resin to form silicon carbide.

In some specific implementations, the first silicon-containing filler includes the silica aerogel powder and the mica powder, and a mass ratio of the silica aerogel powder to the mica powder is 1:3 to 1:1. Under the thermal impact, a temperature of the fire-facing surface of the heat-resistant protective member 8 is rapidly rising to form a steep temperature gradient. A silica aerogel is a porous material with mesopores, and has an extremely low thermal conductivity coefficient. The silica aerogel can delay heat transfer from the fire-facing surface of the heat-resistant protective member 8 to the back fire surface. In addition, under an action of a high temperature of 800 °C to 1000 °C, the silica aerogel is prone to shrinkage of a pore structure, and effect of delaying the heat transfer from the fire-facing surface of the heat-resistant protective member 8 to the back fire surface is weakened. Nevertheless, mica has good heat resistance and thermal insulation, and the mica can still maintain thermal insulation performance at 800 °C to 1000 °C. When the temperature of the fire-facing surface of the heat-resistant protective member 8 rises to 1200 °C, silicon in the first silicon-containing filler reacts with the carbon layer of the first resin 841 to form porous solid silicon carbide to resist the thermal impact, and reduce the heat transfer of the fire-facing surface to the back fire surface. This process can absorb a large amount of heat to further resist the thermal impact.

In some other specific implementations, the first silicon-containing filler includes silicon dioxide and aluminum oxide. A dosage of the silicon dioxide is 50 to 80 wt% of the first silicon-containing filler, such as 50 wt%, 55 wt%, 60 wt%, 65 wt%, 70 wt%, 75 wt%, or 80 wt%. A dosage of the aluminum oxide is 10 to 30 wt% of the first silicon-containing filler, such as 10 wt%, 15% wt%, 20 wt%, 25 wt%, or 30 wt%. Under the high-temperature thermal impact, the silicon dioxide reacts with the carbon layer carbonized by the first resin 841 to form silicon carbide, and the aluminum oxide can improve temperature resistance.

Further, in some embodiments, the filler 842 includes the first silicon-containing filler and a first high-temperature fusion agent, where a dosage of the first high-temperature fusion agent is 10 wt% to 40 wt% of the first silicon-containing filler. The first high-temperature fusion agent includes one or more of talcum powder, wollastonite, mica powder, kaolin, barium sulfate, and silica-alumina powder. It should be noted that a material of the first high-temperature fusion agent is different from a material of the first silicon-containing filler, and the first high-temperature fusion agent helps the first silicon-containing filler melt or gasify to react with the carbon layer carbonized by the first resin 841 to form the solid silicon carbide.

Further, in some embodiments, the filler 842 includes the first silicon-containing filler and a first lubricant for increasing lubricity of the fiber matrix 810 and the first silicon-containing filler in the first resin 841 to help molding of the composition. The first lubricant includes a combination of one or several of polyamide wax, polyethylene wax, paraffin, and talcum powder. A dosage of the first lubricant is 10 wt% to 40 wt% of the first silicon-containing filler, such as 10 wt%, 15 wt%, 20 wt%, 25 wt%, 30 wt%, 35 wt%, or 40 wt%. When the dosage of the first lubricant is less than 10 wt% of the first silicon-containing filler, a function of the first lubricant is limited. When the dosage of the first lubricant is greater than 40 wt% of the first silicon-containing filler, a softening point of the composition is weakened, and then heat resistance performance of the heat-resistant protective member 8 is reduced.

Further, in some embodiments, the functional layer 84 further includes a first ceramic precursor, and the first ceramic precursor includes one or more of a polysilazane resin 811, a polyborosilazane resin 811, and a polycarbosilane resin 811, and is used for generating ceramic materials such as SiCN and SiCNO under the thermal impact, so as to increase temperature resistance and flame impact resistance strength of the heat-resistant protective member 8. The first ceramic precursor may be mixed with the first resin 841 and the filler 842 and cured to form a function, or may be coated on a surface of the compound layer of the first resin 841 and the filler 842. In an embodiment, a ratio of a volume of the first ceramic precursor to a sum of volumes of the first ceramic precursor and the first resin 841 is less than 50%, or a ratio of mass of the first ceramic precursor to a sum of the mass of the first ceramic precursor and the mass of the first resin 841 is less than 50%, thereby ensuring that the heat-resistant protective member has good bending strength at the room temperature while controlling costs of the heat-resistant protective member 8, so that a market competitive advantage of the heat-resistant protective member 8 is maintained while the temperature resistance and the flame impact resistance strength of the heat-resistant protective member 8 are improved.

Optionally, in some embodiments, the filler 842 includes the first silicon-containing filler and a first chopped fiber, and the first chopped fiber is arranged in the functional layer 84 to increase the strength evenness of the functional layer 84. The first chopped fiber includes one or more of a carbon fiber, a silicon carbide fiber, a silicon nitride fiber, a quartz fiber, an aluminum silicate fiber, an asbestos fiber, a high silica oxygen fiber, a boro-carbon fiber, and a carbon nanotube. A dosage of the first chopped fiber is 0 to 15 wt% of the first silicon-containing filler. The first chopped fiber has a length of 0.05 to 30 mm, and a diameter of 1 to 15 µm.

Optionally, in some embodiments, the filler 842 includes the first silicon-containing filler and a first heat-reflective filler, where the first heat-reflective filler has a characteristic of a high melting point, can reduce heat transfer, and includes one or more oxides or nitrides of titanium, iron, aluminum, zinc, lanthanum, and cerium. A dosage of the first heat-reflective filler is 0 to 5 wt% of the first silicon-containing filler.

The reinforcing layer 85 is used as the fire-facing surface, and the reinforcing layer 85 reinforces mechanical performance of the functional layer 84, and improves the room-temperature mechanical performance and the thermal impact resistance performance of the heat-resistant protective member 8. Under an action of the thermal impact, the reinforcing layer 85 ablates and absorbs heat to resist the thermal impact for the functional layer 84. The fiber matrix 810 of the reinforcing layer 85 includes one or more of a high silica fiber, a quartz fiber, a glass fiber, and a basalt fiber. The fiber matrix 810 includes fiber cloth and/or fiber felt. The fiber cloth is one or more of a fiber twill fabric, a fiber satin fabric, a fiber uniaxial fabric, and a fiber multiaxial fabric. The fiber matrix 810 includes the fiber cloth and/or the fiber felt arranged in a stacked manner.

Optionally, in some embodiments, the reinforcing layer 85 includes a second resin 850, the fiber matrix 810 and the second resin 850 together form a compound layer, the second resin 850 is dispersed in pores of the fiber matrix 810 and/or a surface of the fiber matrix 810, a volume percent of the fiber matrix 810 of the reinforcing layer 85 in the reinforcing layer 85 is 50%-75%, and a mass content of a carbon element in the second resin 850 is greater than 40%. The reinforcing layer 85 including the second resin 850 is compounded with the functional layer 84, so as to avoid a problem that after the reinforcing layer 85 without the resin 811 is compounded with the functional layer 84, impregnation of the resin 811 in the functional layer 84 to the reinforcing layer 85 is uneven and insufficient. The reinforcing layer 85 impregnated with the second resin 850 is used as the fire-facing surface, and the second resin 850 absorbs heat and carbonizes to resist heat penetration and protects the functional layer 84. Further, the reinforcing layer 85 includes fiber cloth of a single layer or more than two layers, and the fiber cloth of more than two layers are arranged in a stacked manner and bonded and cured by using the second resin 850.

The second resin 850 in the reinforcing layer 85 includes one or a combination of more of a phenolic resin, a benzoxazine resin, a furan resin, polyurea, and a phenolic modified epoxy resin. A second viscosity regulator is dispersed in the second resin 850, and the second viscosity regulator is used for reducing viscosity of the high-viscosity first resin 841. This facilitates infiltration, penetration, and production processing of the first resin 841 and the fiber matrix 810 into an even product. In this embodiment of this application, a dosage of the second viscosity regulator is 1% to 10% of a volume of the second resin 850, for example, 1%, 5%, 7%, or 10%. When the dosage of the second viscosity regulator is less than 1% of the volume of the second resin 850, the second resin 850 has high viscosity and poor fluidity, and it is difficult to form a product with an even thickness. When the dosage of the second viscosity regulator is higher than 10% of the volume of the second resin 850, the second resin 850 has low viscosity and strong fluidity, which causes a solvent in the second resin 850 to volatilize during processing and molding of the composition, resulting in pore defects in a product. In a specific implementation, the second viscosity regulator includes one or a combination of more of methanol, ethanol, ethyl acetate, acetone, and butanone.

A second curing agent is dispersed in the second resin 850 in the reinforcing layer 85, and the second curing agent can effectively shorten the curing time of the first resin 841, which is conducive to large-scale and batch production of heat-resistant protective members 8. When the second resin 850 is the phenolic resin 811, methenamine is used as the second curing agent, and a dosage of the methenamine is 2.5% to 3% of mass of the phenolic resin. When the second resin 850 is the furfural acetone resin, a phosphoric acid curing agent is used as the second curing agent, and a dosage of the phosphoric acid curing agent is 6% to 7% of mass of the furfural acetone resin. In addition, when the second resin 850 is the benzoxazine resin, the furan resin, or the polyurea, no curing agent is used.

A second flame retardant is dispersed in the second resin 850 in the reinforcing layer 85, and a dosage of the second flame retardant is 5% to 40% of mass of the second resin 850, for example, 5%, 10%, 15%, 20%, 25%, 30%, 35%, or 40%. A dosage of the second flame retardant is 5% to 40% of mass of the second resin 850, for example, 5%, 10%, 15%, 20%, 25%, 30%, 35%, or 40%. The second flame retardant is one or more of ammonium polyphosphate, aluminum hydroxide, or DOPO.

The fiber resin compound layer of the reinforcing layer 85 also includes a second silicon-containing filler, and the second silicon-containing filler accounts for 40-70% of the volume of the fiber matrix 810, for example, 40%, 45%, 50%, 55%, 60%, 65%, or 70. Normally, the second silicon-containing filler begins to melt at the high temperature of 1200 °C, gasification of the second silicon-containing filler can absorb a large amount of heat, the second silicon-containing filler reacts with a carbon layer formed by the second resin 850 to generate solid silicon carbide, and the solid silicon carbide can resist high-temperature erosion and high-temperature shear and extension or compression, can effectively improve the mechanical performance of the heat-resistant protective member 8, and prevent the heat-resistant protective member 8 from being broken through.

The second silicon-containing filler of the reinforcing layer 85 includes one or a combination of more of silica aerogel powder, quartz powder, mica powder, ceramic micro powder, white carbon black, wollastonite, montmorillonite, and talcum powder. Main ingredients of the ceramic micro powder are silicon oxide and aluminum oxide, the aluminum oxide improves temperature resistance of the ceramic micro powder, and under an action of a high temperature of the thermal impact, the silicon dioxide reacts with the carbon layer carbonized by the resin 811 to form the silicon carbide.

In some specific implementations, the second silicon-containing filler of the reinforcing layer 85 includes the silica aerogel powder and the mica powder, and a mass ratio of the silica aerogel powder to the mica powder is 1:3 to 1:1. Under the thermal impact, the temperature of the fire-facing surface of the heat-resistant protective member 8 is rapidly rising to form a steep temperature gradient. The silica aerogel is the porous material with the mesopores, and has the extremely low thermal conductivity coefficient. The silica aerogel can delay the heat transfer from the fire-facing surface of the heat-resistant protective member 8 to the back fire surface. In addition, under the action of the high temperature of 800 °C to 1000 °C, the silica aerogel is prone to shrinkage of the pore structure, and the effect of delaying the heat transfer from the fire-facing surface of the heat-resistant protective member 8 to the back fire surface is weakened. Nevertheless, the mica has good heat resistance and thermal insulation, and the mica can still maintain the thermal insulation performance at 800 °C to 1000 °C. When the temperature of the fire-facing surface of the heat-resistant protective member 8 rises to 1200 °C, silicon in the second silicon-containing filler reacts with the carbon layer of the first resin 841 to form the porous solid silicon carbide to resist the thermal impact, and reduce the heat transfer from the fire-facing surface to the back fire surface. This process can absorb a large amount of heat to further resist the thermal impact.

In some other specific implementations, the second silicon-containing filler of the reinforcing layer 85 includes silicon dioxide and aluminum oxide. A dosage of the silicon dioxide is 50 to 80 wt% of the first silicon-containing filler, such as 50 wt%, 55 wt%, 60 wt%, 65 wt%, 70 wt%, 75 wt%, or 80 wt%. A dosage of the aluminum oxide is 10 to 30 wt% of the first silicon-containing filler, such as 10 wt%, 15% wt%, 20 wt%, 25 wt%, or 30 wt%. Under the high-temperature thermal impact, the silicon dioxide reacts with the carbon layer carbonized by the second resin 850 to form the silicon carbide, and the aluminum oxide can improve temperature resistance and the like. Normally, the second silicon-containing filler begins to melt at the high temperature of 1200 °C, gasification of the second silicon-containing filler can absorb a large amount of heat, the second silicon-containing filler reacts with the carbon layer formed by the second resin 850 to generate solid silicon carbide, and the solid silicon carbide can resist high-temperature erosion and high-temperature shear and extension or compression, can effectively improve the mechanical performance of the heat-resistant protective member 8, and prevent the heat-resistant protective member 8 from being broken through.

Further, in some embodiments, the fiber resin compound layer of the reinforcing layer 85 further includes a phase-change material. The phase-change material is dispersed in the second resin 850, and a dosage of the phase-change material is 5% to 20% of the volume of the fiber matrix 810. Under the thermal impact, the phase-change material is used for absorbing heat and resisting the thermal impact, and can reduce the heat transfer from the fire-facing surface to the back fire surface. To avoid bubbles, between the functional layer 84 and the reinforcing layer 85 and within the functional layer 84, produced due to thermal decomposition of the phase-change material under the action of the thermal impact, which significantly accelerates ablation of the functional layer 84, and affects the thermal impact resistance performance of the heat-resistant protective member 8, the phase-change material is added for use only within the reinforcing layer 85.

Further, in some embodiments, the fiber resin compound layer of the reinforcing layer 85 further includes a colorant, and the colorant includes one or more of carbon black, titanium white, iron black, oil-based color concentrate, and transition metal coloring ion oxides, and is used for adjusting the appearance of the heat-resistant protective member 8 and ensuring consistency of the appearance of the heat-resistant protective member 8.

In some embodiments, the strengthening layer 86 has better heat resistance performance, works together with the reinforcing layer 85 to realize structural symmetry of the upper surface and lower surface of the functional layer 84, reinforces high-temperature mechanical performance of the functional layer 84, and serves as the back fire surface to maintain structural integrity of the heat-resistant protective member 8 under the action of the thermal impact. Further, in some embodiments of this application, a thickness ratio of the reinforcing layer 85, the functional layer 84, to the strengthening layer 86 is (1-2):(8-10):(1-2). The strengthening layer 86 includes a fiber matrix 810, and a structure of the fiber matrix 810 of the strengthening layer 86 is similar to that of the fiber matrix 810 of the reinforcing layer 85. For details, refer to the above embodiment, and details are not described herein again. However, a melting point of the fiber matrix 810 of the strengthening layer 86 is higher than that of the fiber matrix 810 of the reinforcing layer 85. The fiber matrix 810 of the strengthening layer 86 includes one or more of a carbon fiber, a silicon carbide fiber, a silicon nitride fiber, a quartz fiber, an aluminum silicate fiber, an asbestos fiber, a high silica fiber, and a boro-carbon fiber.

In some embodiments, the strengthening layer 86 includes a second resin 850, the fiber matrix 810 and the second resin 850 together form a compound layer, the second resin 850 is dispersed in pores of the fiber matrix 810 and/or a surface of the fiber matrix 810, a volume percent of the fiber matrix 810 of the strengthening layer 86 in the strengthening layer 86 is 50% to 75%, and a mass content of a carbon element in the second resin 850 is greater than 40%. The strengthening layer 86 including the second resin 850 is compounded with the functional layer 84, so as to avoid a problem that after the strengthening layer 86 without the resin 811 is compounded with the functional layer 84, impregnation of the resin 811 in the functional layer 84 to the strengthening layer 86 is uneven and insufficient. Further, the strengthening layer 86 includes fiber cloth of a single layer or more than two layers, and the fiber cloth of more than two layers are arranged in a stacked manner and bonded and cured by using the second resin 850.

Further, in some embodiments, a second curing agent and/or a second flame retardant are/is dispersed in the second resin 850 of the strengthening layer 86, and the second curing agent and the second flame retardant in the strengthening layer 86 are similar to the second curing agent and the second flame retardant in the reinforcing layer 85. For details, refer to the above embodiment, and details are not described herein again.

The compound layer also includes a second silicon-containing filler, and the second silicon-containing filler in the strengthening layer 86 is similar to the second silicon-containing filler in the reinforcing layer 85. For details, refer to the above embodiment, and details are not described herein again.

The compound layer of the strengthening layer 86 further includes a second chopped fiber, and the second chopped fiber is arranged in the functional layer 84 to increase strength evenness of the strengthening layer 86. A dosage of the second chopped fiber is 0 to 15 wt% of the second silicon-containing filler, such as 2 wt%, 5 wt%, 7 wt%, 10 wt%, 12 wt%, or 15 wt%. The second chopped fiber includes one or more of a carbon fiber, a silicon carbide fiber, a silicon nitride fiber, a quartz fiber, an aluminum silicate fiber, an asbestos fiber, a high silica fiber, a boro-carbon fiber, and a carbon nanotube; and the second chopped fiber has a length of 0.05 to 30 mm, and a diameter of 1 to 15 µm.

The compound layer of the strengthening layer 86 also includes a second high-temperature fusion agent and/or a second lubricant and/or a second ceramic precursor and/or a second reflective filler 842 and/or a phase-change material and/or a colorant. That is, the compound layer of the reinforcing layer 85 is basically the same as the compound layer of the strengthening layer 86 in structure, and a difference is that the melting point of the fiber matrix 810 of the strengthening layer 86 is higher than that of the fiber matrix 810 of the reinforcing layer 85. The second high-temperature fusion agent, the second lubricant, the second ceramic precursor, the second reflective filler 842, the phase-change material, and the colorant in the strengthening layer 86 are similar to the second high-temperature fusion agent, the second lubricant, the second ceramic precursor, the second reflective filler 842, the phase-change material, and the colorant in the reinforcing layer 85. For details, refer to the above embodiment, and details are not described herein again.

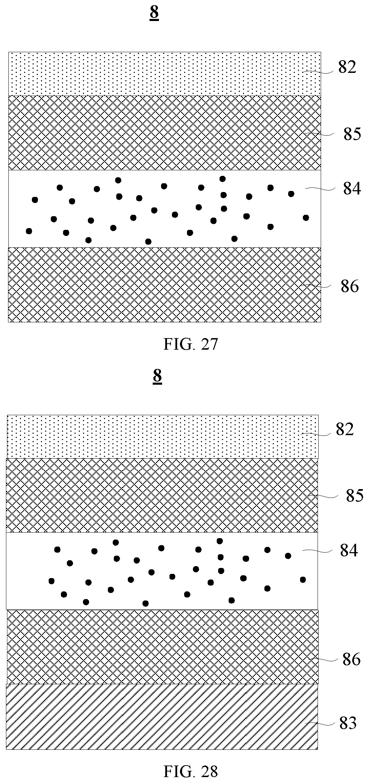

Optionally, in some embodiments, the heat-resistant protective member 8 further includes a gas absorbent for absorbing a combustible gas ejected from a pressure relief valve of a cell to delay thermal runaway of a battery. In some embodiments, the gas absorbent fills at least one layer of the reinforcing layer 85, the functional layer 84, and the strengthening layer 86. In some other embodiments, the gas absorbent is arranged between two adjacent layers in the reinforcing layer 85, the functional layer 84, and the strengthening layer 86 to form a gas absorbent layer 82; or the gas absorbent is arranged on one side of the reinforcing layer 85 away from the functional layer 84 to form the gas absorbent layer 82, as shown in FIG. 27. Optionally, in some embodiments, the gas absorbent includes one or more of a carbon molecular sieve, a zeolite sieve, graphene, talcum powder, and aluminum oxide.

Optionally, in some embodiments, refer to FIG. 28. The heat-resistant protective member 8 further includes a heat insulation layer 83, and the heat insulation layer 83 is arranged on one side of the strengthening layer 86 away from the functional layer 84, and is used for blocking transfer of the temperature of the fire-facing surface of the heat-resistant protective member 8 to a temperature of the back fire surface. Optionally, in some embodiments, the heat insulation layer 83 includes an aerogel coating or aerogel felt.

Optionally, in some embodiments, the reinforcing layer 85 covers the entire functional layer 84; and the strengthening layer 86 includes a plurality of sub-strengthening layers 86 arranged at intervals. Because the melting point of a fiber of the strengthening layer 86 is higher than that of the fiber matrix 810 of the reinforcing layer 85, costs of the strengthening layer 86 are higher. In order to reduce the costs of the heat-resistant protective member 8 as a whole, the strengthening layer 86 is set as the plurality of sub-strengthening layers 86 arranged at intervals, and each sub-strengthening layer 86 is arranged in correspondence with a pressure relief structure during usage. Because the strengthening layer 86 is arranged only at positions corresponding to pressure relief structures, the costs of the heat-resistant protective member 8 can be reduced as a whole.

The heat-resistant protective member 8 provided in this application is introduced below with reference to specific embodiments and comparative embodiments.

### Embodiment 1

In this embodiment, fiber cloth of seven layers is impregnated in the resin and then arranged in a stacked manner, where curing conditions are as follows: first performing molding, where a molding temperature is 140 °C, and molding time is 30 min; and then performing baking in an oven, where a baking temperature is 150 °C, and baking time is 2h. Another manner is as follows: first performing semi-curing and then performing further curing on a preform of the heat-resistant protective member, where specifically, fiber cloth of seven layers is first impregnated in the resin; and then stood at 25 °C until a surface is dry (semi-cured), or molded or dried in an oven at 70 °C for 20 min until a surface is dry (semi-cured); and then arranging a semi-cured perform of the heat-resistant protective member in a stacked manner and preforming curing, where curing conditions are as follows: first performing molding, where a molding temperature is 150 °C, molding time is 20min; and then performing baking in the oven, where a baking temperature is 180 °C, and baking time is 1h.

High silica fiber cloth and quartz fiber cloth used in this embodiment are purchased from Huatek New Material Inc., and carbon fiber cloth is purchased from Shibang (Shanghai) Industrial Co., Ltd.

A phenolic resin used in this embodiment is purchased from Jinan Shengquan Group Co., Ltd., a benzoxazine resin is purchased from Chengdu Coryes Polymer Science & Technology Co., Ltd., a furfural acetone resin is purchased from Shandong Yongchuang Material Technology Co., Ltd., and an epoxy resin is purchased from Kukdo Chemical (Kunshan) Co., Ltd.

Thirteen samples are prepared in Embodiment 1, and are sample 1-1 to sample 1-13.

### Comparative example 1

A preparation method in Comparative embodiment 1 of this application is basically the same as that in Embodiment 1. Two comparative samples are prepared in this application, namely, comparative sample 1-A and comparative sample 1-B.

### Performance testing

### i.Bending strength test

A bending strength test method of a heat-resistant protective member adopts the national standard "GB/T 1449-2005 Fiber-reinforced plastic composites-Determination of flexural properties", and a test sample is prepared with a thickness of 1 mm<h≤3 mm, and a width of 15±0.5 mm. Test equipment is a universal mechanical testing machine, and specific requirements of the test equipment are as those of the test equipment in Article 5 of the national standard "GB/T 1446-2005 Fiber-reinforced plastics composites-The generals for determination of properties".

### (2)1500 °C hot airflow impact test

Fix four corners of a heat-resistant protective member, apply 1500 °C hot airflow to the heat-resistant protective member for a duration of 30s, and test whether the heat-resistant protective member is fire-permeable, where "fire-permeable" refers to a phenomenon of naked flame appearing on the back of the heat-resistant protective member when the flame is ablated. Since the heat-resistant protective member includes long fiber cloth, the heat-resistant protective member is not broken through but is fire-permeable during the test.

Test results are shown in Table 1, where a volume percent refers to a volume percent of a fiber matrix in a compound layer.

**Table 1: Performance test results of heat-resistant protective members prepared in Embodiment 1 and Comparative embodiment 1 of this application**

| Item | Resin | Fiber matrix | | | Performance testing | |
|---|---|---|---|---|---|---|
| | Material | Substance | Volume Percent | Pattern | Bending strength/MPa | 1500 °C hot airflow impact for 30s |
| Sample 1-1 | Phenolic resin | Quartz fiber | 50% | Uniaxial fabric | 152 | Fire-impermeable |
| Sample 1-2 | Phenolic resin | High silica fiber | 50% | Uniaxial fabric | 155 | Fire-impermeable |
| Sample 1-3 | Benzoxazine resin | High silica fiber | 50% | Uniaxial fabric | 157 | Fire-impermeable |
| Sample 1-4 | Benzoxazine resin: phenolic resin = 4:1 | Carbon fiber | 60% | Uniaxial fabric | 215 | Fire-impermeable |
| Sample 1-5 | Phenolic resin | High silica fiber | 60% | Uniaxial fabric | 159 | Fire-impermeable |
| Sample 1-6 | Benzoxazine resin | High silica fiber | 60% | Uniaxial fabric | 163 | Fire-impermeable |
| Sample 1-7 | Benzoxazine resin | High silica fiber | 70% | Uniaxial fabric | 174 | Fire-impermeable |
| Sample 1-8 | Furfural acetone resin | High silica fiber | 70% | Uniaxial fabric | 159 | Fire-impermeable |
| Sample 1-9 | Benzoxazine resin | Carbon fiber | 75% | Uniaxial fabric | 259 | Fire-impermeable |
| Sample 1-10 | Benzoxazine resin | High silica fiber | 75% | Uniaxial fabric | 243 | Fire-impermeable |
| Sample 1-11 | Benzoxazine resin | High silica fiber | 75% | Twill fabric | 196 | Fire-impermeable |
| Sample 1-12 | Benzoxazine resin | High silica fiber | 75% | Satin fabric | 213 | Fire-impermeable |
| Sample 1-13 | Benzoxazine resin | High silica fiber | 75% | Multiaxial fabric | 178 | Fire-impermeable |
| Comparative sample 1-A | Epoxy resin | High silica fiber | 45% | Uniaxial fabric | 110 | Flame-permeable |
| Comparative sample 1-B | Phenolic resin | Quartz fiber | 45% | Uniaxial fabric | 124 | Flame-permeable |

It can be seen from the above Table 1 that, when the volume percent of the fiber matrix is less than 50%, thermal impact resistance performance deteriorates, and the heat-resistant protective member is fire-permeable under the 1500 °C hot airflow impact for 30s. Bending strength of the heat-resistant protective member with the uniaxial fabric is better than that of the heat-resistant protective member with another weaving manner. In addition, a heat-resistant protective member without a fiber matrix includes only a resin, and a thermal decomposition temperature of the resin is generally several hundred degrees, that is, thermal decomposition of the resin occurs at several hundred degrees, and the resin cannot resist thermal impact. Besides, the bending strength of the heat-resistant protective member made of carbon fiber cloth is significantly better than that of the heat-resistant protective member made of the high silica fiber, but has higher production costs.

### Embodiment 2

In this embodiment, a ceramic precursor slurry is polysilazane, a resin is mixed with the polysilazane, and fiber cloth is impregnated in a mixture of the resin and the polysilazane, where curing conditions are as follows: first performing molding at 60 °C for 30min; then heating to 140 °C for 30min; and then baking at an oven for 156 °C for 1.5h until complete curing is performed.

A polysilazane resin and a polyborosilazane resin used in this embodiment are purchased from Iota Silicone Oil(Anhui) Co., Ltd., and other resin and fiber cloth purchase manufacturers are the same as those in Embodiment 1.

Six samples are prepared in Embodiment 2, and are sample 2-1 to sample 2-6.

### Comparative example 2

A preparation method in Comparative embodiment 2 of this application is basically the same as that in Embodiment 2. Five comparative samples are prepared in this application, namely, comparative sample 2-A to comparative sample 2-E.

Test results are shown in Table 2, and a ceramic precursor slurry proportion is a ratio of a volume of a ceramic precursor slurry to a sum of volumes of the ceramic precursor slurry and a resin.

**Table 2: Performance test results of heat-resistant protective members prepared in Embodiment 2 and Comparative embodiment 2 of this application**

| | Resin | Fiber cloth | Ceramic precursor slurry | | Performance testing | |
|---|---|---|---|---|---|---|
| | Material | Material | Material | Ceramic precursor slurry proportio n | Performance 1 (Bending strength/MPa ) | Performanc e 2 (1500 °C hot airflow impact for 50s) |
| Comparativ e sample 2-A | Phenolic resin | High silica fiber (uniaxial fabric and fiber cloth volume proportion : 75%) | Polysilazane resin | 50% | 193 | Fire-impermeabl e |
| Sample 2-1 | Benzoxazin e | High silica fiber (uniaxial fabric and fiber cloth volume proportion : 75%) | Polysilazane resin | 40% | 211 | Fire-impermeabl e |
| Sample 2-2 | Phenolic modified epoxy resin | High silica fiber (uniaxial fabric and fiber cloth volume proportion : 75%) | Polysilazane resin | 30% | 219 | Fire-impermeabl e |
| Sample 2-3 | Furfural acetone resin | High silica fiber (uniaxial fabric and fiber cloth volume proportion : 75%) | Polysilazane resin | 20% | 226 | Fire-impermeabl e |
| Comparativ e sample 2-B | Phenolic resin | High silica fiber (uniaxial fabric and fiber cloth volume proportion : 75%) | Polysilazane resin | 10% | 238 | Flame-permeable |
| Comparativ e sample 2-C | Benzoxazin e | High silica fiber (uniaxial fabric and fiber cloth volume proportion : 75%) | Polyborosilazan e resin | 50% | 197 | Fire-impermeabl e |
| Sample 2-4 | Benzoxazin e | High silica fiber (uniaxial fabric and fiber cloth volume proportion : 75%) | Polyborosilazan e resin | 40% | 201 | Fire-impermeabl e |
| Sample 2-5 | Benzoxazin e | High silica fiber (uniaxial fabric and fiber cloth volume proportion : 75%) | Polyborosilazan e resin | 30% | 206 | Fire-impermeabl e |
| Sample 2-6 | Benzoxazin e | High silica fiber (uniaxial fabric and fiber cloth volume proportion : 75%) | Polyborosilazan e resin | 20% | 217 | Fire-impermeabl e |
| Comparativ e sample 2-D | Benzoxazin e | High silica fiber (uniaxial fabric and fiber cloth volume proportion : 75%) | Polyborosilazan e resin | 10% | 229 | Flame-permeable |
| Comparativ e sample 2-E | Benzoxazin e | High silica fiber (uniaxial fabric and fiber cloth volume proportion : 75%) | Without a ceramic precursor slurry | | 243 | Flame-permeable |

It can be seen from the above Tables 1 and 2 that, the heat-resistant protective member with a ceramic precursor has reinforced thermal impact resistance performance, is fire-impermeable under the 1500 °C thermal airflow impact for 50s, and can withstand thermal impact for a longer time period than the heat-resistant protective member without a ceramic precursor. In addition, the thermal impact resistance performance of the heat-resistant protective member is related to a content of the ceramic precursor slurry. When mass of the ceramic precursor slurry accounts for less than 20% of a sum of the mass of the ceramic precursor slurry and mass of the resin, the heat-resistant protective member is fire-permeable under 1500 °C hot airflow impact for 50s. In addition, when mass of the ceramic precursor slurry accounts for greater than 50% of a sum of the mass of the ceramic precursor slurry and mass of the resin, the bending strength of the heat-resistant protective member decreases.

### Embodiment 3

In this embodiment, a fiber-resin compound semi-cured layer is first prepared according to the method in Embodiment 1. Next, a silicon-containing filler is evenly sprayed on a surface of the fiber-resin compound semi-cured layer. Then, hot-pressing and curing are performed, where a hot-pressing temperature is 140 °C, hot-pressing time is 30 min, and a part of the silicon-containing filler can enter a resin and fiber cloth during the hot-pressing. Finally, baking at 150 °C for 2h is performed.

Silica aerogel used in this embodiment is prepared by our company by using a sol-gel process, mica powder is purchased from Anhui Grea New Material Technology Co., Ltd., ceramic micro powder, quartz powder, and white carbon black are purchased from Shanghai Huijingya Nano New Materials Co., Ltd., and resin and fiber cloth purchase manufacturers are the same as those in Embodiment 1.

Fifteen samples are prepared in Embodiment 3, and are sample 3-1 to sample 3-15.

### Comparative example 3

A preparation method in Comparative embodiment 3 of this application is basically the same as that in Embodiment 3. Six comparative samples are prepared in this application, namely, comparative sample 3-A to comparative sample 3-F.

Test results are shown in Table 3. A content of a silicon-containing filler refers to a volume ratio of the silicon-containing filler to a fiber matrix.

**Table 3: Performance test results of heat-resistant protective members prepared in Embodiment 3 and Comparative embodiment 3 of this application**

| | Resin | Fiber cloth | Silicon-containing filler | | | Performance testing | |
|---|---|---|---|---|---|---|---|
| | Material | Material | Material | Content (compar ed with a volume of a fiber matrix) | Ra tio | Perfor mance 1 (Bendi ng strengt h/MPa) | Performa nce 2 (1500 °C hot airflow impact for 50s) |
| Comparati ve sample 3-A | Phenolic resin | High silica fiber (uniaxial fabric and fiber cloth volume proportion: 75%) | Silica aerogel powder and mica powder | 35% | 1:1 | 175 | Flame-permeabl e |
| Sample 3-1 | Benzoxazine resin | High silica fiber (uniaxial fabric and fiber cloth volume proportion: 75%) | Silica aerogel powder and mica powder | 40% | 1:1 | 173 | Fire-imperme able |
| Sample 3-2 | Benzoxazine resin | High silica fiber (uniaxial fabric and fiber cloth volume proportion: 75%) | Silica aerogel powder and mica powder | 50% | 1:1 | 147 | Fire-imperme able |
| Sample 3-3 | Phenolic modified epoxy resin | High silica fiber (uniaxial fabric and fiber cloth volume proportion: 75%) | Silica aerogel powder and mica powder | 50% | 1:1 | 137 | Fire-imperme able |
| Sample 3-4 | Furfural acetone resin | High silica fiber (uniaxial fabric and fiber cloth volume proportion: 75%) | Silica aerogel powder and mica powder | 50% | 1:1 | 135 | Fire-imperme able |
| Sample 3-5 | Benzoxazine resin | High silica fiber (uniaxial fabric and fiber cloth volume proportion: 75%) | Silica aerogel powder and mica powder | 60% | 1:1 | 136 | Fire-imperme able |
| Sample 3-6 | Furfural acetone resin | High silica fiber (uniaxial fabric and fiber cloth volume proportion: 75%) | Silica aerogel powder and mica powder | 60% | 1:1 | 133 | Fire-imperme able |
| Sample 3-7 | Furfural acetone resin | High silica fiber (uniaxial fabric and fiber cloth volume proportion: 75%) | Silica aerogel powder and mica powder | 70% | 1:1 | 126 | Fire-imperme able |
| Sample 3-8 | Benzoxazine resin | High silica fiber (uniaxial fabric and fiber cloth volume proportion: 75%) | Silica aerogel powder and mica powder | 70% | 1:1 | 129 | Fire-imperme able |
| Comparati ve sample 3-B | Phenolic resin | High silica fiber (uniaxial fabric and fiber cloth volume proportion: 75%) | Silica aerogel powder and mica powder | 75% | 1:1 | 102 | Flame-permeabl e |
| Comparati ve sample 3-C | Benzoxazine resin | High silica fiber (uniaxial fabric and fiber cloth volume proportion: 75%) | Silica aerogel powder and mica powder | 75% | 1:1 | 113 | Flame-permeabl e |
| Comparati ve sample 3-D | Phenolic resin | High silica fiber (uniaxial fabric and fiber cloth volume proportion: 75%) | Silica aerogel powder and mica powder | 50% | 1:0 .5 | 109 | Flame-permeabl e |
| Sample 3-10 | Benzoxazine resin | High silica fiber (uniaxial fabric and fiber cloth volume proportion: 75%) | Silica aerogel and mica powder | 50% | 1:2 | 142 | Fire-imperme able |
| Sample 3-11 | Benzoxazine resin | High silica fiber (uniaxial fabric and fiber cloth volume proportion: 75%) | Silica aerogel and mica powder | 50% | 1:3 | 151 | Fire-imperme able |
| Sample 3-12 | | | | | | | |
| Comparati ve sample 3-E | Phenolic resin | High silica fiber (uniaxial fabric and fiber cloth volume proportion: 75%) | Silica aerogel and mica powder | 50% | 1:4 | 147 | Fire-imperme able |
| Sample 3-13 | Phenolic resin | High silica fiber (uniaxial fabric and fiber cloth volume proportion: 75%) | Ceramic micro powder | 50% | / | 142 | Fire-imperme able |
| Sample 3-14 | Benzoxazine : phenolic resin = 4:1 | High silica fiber (uniaxial fabric and fiber cloth volume proportion: 75%) | Quartz powder | 50% | / | 144 | Fire-imperme able |
| Sample 3-15 | Benzoxazine resin | High silica fiber (uniaxial fabric and fiber cloth volume proportion: 75%) | White carbon black | 50% | / | 141 | Fire-imperme able |
| Comparati ve sample 3-F | Phenolic resin | High silica fiber (uniaxial fabric and fiber cloth volume proportion: 75%) | Null | | | 243 | Flame-permeabl e |

### Embodiment 4

In this embodiment, a fiber-resin compound semi-cured layer is first prepared according to the method in Embodiment 1. Next, a mixture of a silicon-containing filler and a high-temperature fusion agent (or only the high-temperature fusion agent) is evenly sprayed on a surface of the fiber-resin compound semi-cured layer. Then, hot-pressing and curing are performed, where a hot-pressing temperature is 140 °C, hot-pressing time is 30 min, and a part of the silicon-containing filler and the high-temperature fusion agent (or only the high-temperature fusion agent) can enter a resin and fiber cloth during the hot-pressing. Finally, baking at 150 °C for 2h is performed.

Talcum powder, kaolin, and silica-alumina powder used in this embodiment are purchased from Shanghai Huijingya Nano New Materials Co., Ltd., and silicon-containing filler, resin, and fiber cloth purchase manufacturers are the same as those in Embodiment 3.

Twelve samples are prepared in Embodiment 4, and are sample 4-1 to sample 4-12, where sample 4-1 to sample 4-8 are added with silicon-containing fillers and high-temperature fusion agents; and sample 4-9 to sample 4-12 are added with only high-temperature fusion agents.

### Comparative embodiment 4

A preparation method in Comparative embodiment 4 of this application is basically the same as that in Embodiment 4. Six comparative samples are prepared in this application, namely, comparative sample 4-A to comparative sample 4-F.

Test results are shown in Table 4-1 and Table 4-2.

**Table 4-1: Performance test results of a first group of heat-resistant protective members prepared in Embodiment 4 and Comparative embodiment 4 of this application**

| | Resin | Fiber cloth | Silicon-containing filler | | High-temperature fusion agent | | Performance testing | |
|---|---|---|---|---|---|---|---|---|
| | Mater ial | Material | Material | Cont ent | Materi al | Conte nt in the silicon contai ning filler | Perfor mance 1 (Bendi ng strengt h/MPa ) | Performance 2 (1500 °C hot airflow impact for 50s) |
| Comparati ve sample 4-A | Phen olic resin | High silica fiber (uniaxial fabric and fiber cloth volume proportion: 75%) | Silica aerogel and mica powder 1:3 | 50% | Talcu m powde r | 5 wt% | 142 | Fire-impermeable |
| Sample 4-1 | Benz oxazi ne resin | High silica fiber (uniaxial fabric and fiber cloth volume proportion: 75%) | Silica aerogel and mica powder 1:3 | 50% | Silica-alumin a powde r | 10 wt% | 147 | Fire-impermeable |
| Sample 4-2 | Benz oxazi ne resin | High silica fiber (uniaxial fabric and fiber cloth volume proportion: 75%) | Silica aerogel and mica powder 1:3 | 50% | Talcu m powde r | 10 wt% | 151 | Fire-impermeable |
| Sample 4-3 | Benz oxazi ne resin | High silica fiber (uniaxial fabric and fiber cloth volume proportion: 75%) | Silica aerogel and mica powder 1:3 | 50% | Kaolin | 20 wt% | 157 | Fire-impermeable |
| Sample 4-4 | Benz oxazi ne resin | High silica fiber (uniaxial fabric and fiber cloth volume proportion: 75%) | Silica aerogel and mica powder 1:3 | 50% | Talcu m powde r | 20 wt% | 168 | Fire-impermeable |
| Sample 4-5 | Benz oxazi ne resin | High silica fiber (uniaxial fabric and fiber cloth volume proportion: 75%) | Silica aerogel and mica powder 1:3 | 50% | Wollas tonite | 30 wt% | 166 | Fire-impermeable |
| Sample 4-6 | Benz oxazi ne resin | High silica fiber (uniaxial fabric and fiber cloth volume proportion: 75%) | Silica aerogel and mica powder 1:3 | 50% | Talcu m powde r | 30 wt% | 174 | Fire-impermeable |
| Sample 4-7 | Benz oxazi ne resin | High silica fiber (uniaxial fabric and fiber cloth volume proportion: 75%) | Silica aerogel and mica powder 1:3 | 50% | Talcu m powde r | 40 wt% | 179 | Fire-impermeable |
| Sample 4-8 | Benz oxazi ne resin | High silica fiber (uniaxial fabric and fiber cloth volume proportion: 75%) | Ceramic micro powder | 50% | Talcu m powde r | 40 wt% | 177 | Fire-impermeable |
| Comparati ve sample 4-B | Furfu ral aceto ne resin | High silica fiber (uniaxial fabric and fiber cloth volume proportion: 75%) | Silica aerogel and mica powder 1:3 | 50% | Talcu m powde r | 45 wt% | 181 | Fire-impermeable |
| Comparati ve sample 4-C | Phen olic modif ied epox y resin | High silica fiber (uniaxial fabric and fiber cloth volume proportion: 75%) | Silica aerogel and mica powder 1:3 | 50% | Null | | 138 | Fire-impermeable |

It is also found through research that a higher content of the high-temperature fusion agent indicates higher bending strength, but when the content of the high-temperature fusion agent is greater than 40 wt%, such as the comparative sample 4-B, wettability between the silicon-containing filler and the high-temperature fusion agent, and the resin is poor, and stratification occurs.

**Table 4-2: Performance test results of a second group of heat-resistant protective members prepared in Embodiment 4 and Comparative embodiment 4 of this application**

| | Resin | Fiber cloth | High-temperature fusion agent | | Performance testing | |
|---|---|---|---|---|---|---|
| | Material | Material | Materi al | Content (compar ed with a volume of a fiber matrix) | Perform ance 1 (Bendin 9 strength /MPa) | Performance 2 (1500 °C hot airflow impact for 50s) |
| Compa rative sample 4-D | Phenolic modified epoxy resin | High silica fiber (uniaxial fabric and fiber cloth volume proportion: 75%) | Mica powde r | 35% | 186 | Flame-permeable |
| Sample 4-9 | Benzoxazine resin | High silica fiber (uniaxial fabric and fiber cloth volume proportion: 75%) | Mica powde r | 40% | 179 | Fire-impermeable |
| Sample 4-10 | Benzoxazine resin | High silica fiber (uniaxial fabric and fiber cloth volume proportion: 75%) | Silica-alumi na powde r | 50% | 145 | Fire-impermeable |
| Sample 4-11 | Benzoxazine resin | High silica fiber (uniaxial fabric and fiber cloth volume proportion: 75%) | Kaoli n | 60% | 135 | Fire-impermeable |
| Sample 4-12 | Phenolic resin | High silica fiber (uniaxial fabric and fiber cloth volume proportion: 75%) | Wolla stonite | 70% | 121 | Fire-impermeable |
| Compa rative sample 4-E | Phenolic modified epoxy resin | High silica fiber (uniaxial fabric and fiber cloth volume proportion: 75%) | Mica powde r | 75% | 115 | Flame-permeable |
| Compa rative sample 4-F | Benzoxazine resin | High silica fiber (uniaxial fabric and fiber cloth volume proportion: 75%) | Without the high-temperature fusion agent | | 243 | Flame-permeable |

It can be seen from Table 1 and Table 4 above that, the heat-resistant protective member with the high-temperature fusion agent has reinforced thermal impact resistance performance, can be flame-impermeable under 1500 °C hot airflow impact for 50s, and can withstand thermal impact for a longer time period than the heat-resistant protective member without the high-temperature fusion agent. In addition, an excessively high or low content of the high-temperature fusion agent affects the thermal impact resistance performance of the heat-resistant protective member.

### Embodiment 5

In this embodiment, a fiber resin compound layer is first prepared according to the method in Embodiment 1. Next, a mixture of a silicon-containing filler and a lubricant is evenly sprayed on a surface of the fiber resin compound layer. Then, hot-pressing and curing are performed, where a hot-pressing temperature is 140 °C, hot-pressing time is 30 min, and a part of the silicon-containing filler can enter a resin and fiber cloth during the hot-pressing. Finally, baking at 150 °C for 2h is performed.

Talcum powder used in this embodiment is purchased from Shanghai Huijingya Nano New Materials Co., Ltd., paraffin, polyethylene wax, and polyamide wax are purchased from Shanghai Yiba Raw Materials Co., Ltd., and silicon-containing filler, resin, and fiber cloth purchase manufacturers are the same as those in Embodiment 3.

Four samples are prepared in Embodiment 5, and are sample 5-1 to sample 5-4.

### Comparative Embodiment 5

A preparation method in Comparative embodiment 5 of this application is basically the same as that in Embodiment 5. Three comparative samples are prepared in this application, namely, comparative sample 5-A to comparative sample 5-C.

Test results are shown in Table 5. A content of a lubricant in a silicon-containing filler refers to a mass ratio of the lubricant to the silicon-containing filler.

**Table 5: Performance test results of heat-resistant protective members prepared in Embodiment 5 and Comparative embodiment 5 of this application**

| | Resin | Fiber cloth | Silicon-containing filler | | Lubricant | | Performance testing | |
|---|---|---|---|---|---|---|---|---|
| | Materi al | Material | Material | Content (compare d with a volume of a fiber matrix) | Materi al | Content in the silicon-containi ng filler | Performa nce 1 (Bending strength/ MPa) | Performance 2 (1500 °C hot airflow impact for 50s) |
| Compar ative sample 5-A | Phenol ic resin | High silica fiber (uniaxial fabric and fiber cloth volume proportion: 75%) | Silica aerogel and mica powder 1:3 | 50% | Talcum powder | 5 wt% | 142 | Fire-impermeable |
| Sample 5-1 | Benzo xazine resin | High silica fiber (uniaxial fabric and fiber cloth volume proportion: 75%) | Silica aerogel and mica powder 1:3 | 50% | Talcum powder | 10 wt% | 151 | Fire-impermeable |
| Sample 5-2 | Benzo xazine resin | High silica fiber (uniaxial fabric and fiber cloth volume proportion: 75%) | Silica aerogel and mica powder 1:3 | 50% | Paraffi n | 20 wt% | 155 | Fire-impermeable |
| Sample 5-3 | Benzo xazine resin | High silica fiber (uniaxial fabric and fiber cloth volume proportion: 75%) | Silica aerogel and mica powder 1:3 | 50% | Talcum powder | 20 wt% | 168 | Fire-impermeable |
| Sample 5-4 | Benzo xazine resin | High silica fiber (uniaxial fabric and fiber cloth volume proportion: 75%) | Silica aerogel and mica powder 1:3 | 50% | Polyeth ylene wax | 30 wt% | 159 | Fire-impermeable |
| Sample 5-5 | Benzo xazine resin | High silica fiber (uniaxial fabric and fiber cloth volume proportion: 75%) | Aerogel and mica powder 1:3 | 50% | Talcum powder | 30 wt% | 174 | Fire-impermeable |
| Sample 5-6 | Benzo xazine resin: phenol ic resin = 4:1 | High silica fiber (uniaxial fabric and fiber cloth volume proportion: 75%) | Silica aerogel and mica powder 1:3 | 50% | Polyam ide wax | 40 wt% | 167 | Fire-impermeable |
| Sample 5-7 | Benzo xazine resin | High silica fiber (uniaxial fabric and fiber cloth volume proportion: 75%) | Silica aerogel and mica powder 1:3 | 50% | Talcum powder | 40 wt% | 179 | Fire-impermeable |
| Compar ative sample 5-B | Furfur al aceton e resin | High silica fiber (uniaxial fabric and fiber cloth volume proportion: 75%) | Silica aerogel and mica powder 1:3 | 50% | Talcum powder | 45 wt% | 181 | Fire-impermeable |
| Compar ative sample 5-C | Phenol ic resin | High silica fiber (uniaxial fabric and fiber cloth volume proportion: 75%) | Silica aerogel and mica powder 1:3 | 50% | Null | | 137 | Fire-impermeable |

It is also found through research that a higher content of the lubricant indicates higher bending strength, but when the content of the lubricant is greater than 40 wt%, such as the comparative sample 5-B, wettability between the silicon-containing filler or the lubricant and the resin is poor, and stratification occurs.

### Embodiment 6

In this embodiment, a resin and a silicon-containing filler are mixed in proportion, and the silicon-containing filler may be added in stages to evenly mix the addition. Curing is performed after even mixing, and curing conditions are the same as those in Embodiment 1.

Raw material purchase is the same as that in Embodiment 3.

Thirteen samples are prepared in Embodiment 6, and are sample 6-1 to sample 6-13.

### Comparative Embodiment 6

A preparation method in Comparative embodiment 6 of this application is basically the same as that in Embodiment 6. Two comparative samples are prepared in this application, namely, comparative sample 6-A and comparative sample 6-B.

Test results are shown in Table 6. A ratio of a resin to a silicon-containing filler is a mass ratio.

**Table 6: Performance test results of heat-resistant protective members prepared in Embodiment 6 and Comparative embodiment 6 of this application**

| | Resin | Silicon-containing filler | | Performance testing | |
|---|---|---|---|---|---|
| | Material | Material | Ratio of a resin to a silicon-containing filler | Performance 1 (Bending strength/MPa) | Performance 2 (1500 °C hot airflow impact for 30s) |
| Comparative sample 6-A | Furfural acetone resin | Silica aerogel powder and mica powder 1:3 | 1:0.5 | 24 | Broken |
| Sample 6-1 | Benzoxazine resin | Silica aerogel powder and mica powder 1:3 | 1:1 | 36 | Unbroken |
| Sample 6-2 | Benzoxazine resin | Silica aerogel powder and mica powder 1:3 | 1:2 | 57 | Unbroken |
| Sample 6-3 | Benzoxazine resin | Silica aerogel powder and mica powder 1:3 | 1:3 | 69 | Unbroken |
| Comparative sample 6-B | Furfural acetone resin | Silica aerogel powder and mica powder 1:3 | 1:4 | 59 | Broken |
| Sample 6-4 | Benzoxazine resin | Mica powder | 1:1 | 35 | Unbroken |
| Sample 6-5 | Benzoxazine resin | Ceramic micro powder | 1:1 | 36 | Unbroken |
| Sample 6-6 | Furfural acetone resin | Mica powder | 1:2 | 56 | Unbroken |
| Sample 6-7 | Benzoxazine resin | Mica powder | 1:2 | 51 | Unbroken |
| Sample 6-8 | Benzoxazine resin | Ceramic micro powder | 1:2 | 52 | Unbroken |
| Sample 6-9 | Benzoxazine resin | Quartz powder | 1:2 | 54 | Unbroken |
| Sample 6-10 | Benzoxazine resin | Mica powder | 1:3 | 73 | Unbroken |
| Sample 6-11 | Benzoxazine resin | Ceramic micro powder | 1:3 | 75 | Unbroken |
| Sample 6-12 | Benzoxazine resin | Quartz powder | 1:3 | 71 | Unbroken |
| Sample 6-13 | Phenolic resin | Mica powder | 1:3 | 67 | Unbroken |

### Embodiment 7

In this embodiment, a silicon-containing filler is mixed with a high-temperature fusion agent, a mixture of the silicon-containing filler and the high-temperature fusion agent is added to a resin and mixed evenly, and the silicon-containing filler and the high-temperature fusion agent can be added in stages to evenly mix the addition. Curing is performed after even mixing, and curing conditions are the same as those in Embodiment 1.

Raw material purchase is the same as that in Embodiment 4.

Thirteen samples are prepared in Embodiment 7, and are sample 7-1 to sample 7-13.

Test results are shown in Table 7. A content of the high-temperature fusion agent in the silicon-containing filler refers to a mass ratio of the high-temperature fusion agent to the silicon-containing filler. A ratio of a resin to a silicon-containing filler is a mass ratio.

**Table 7: Performance test results of heat-resistant protective members prepared in Embodiment 7 of this application**

| | Resin | Silicon-containing filler | | High-temperature fusion agent | | Performance testing | |
|---|---|---|---|---|---|---|---|
| | Material | Material | Ratio of a resin to a silicon-containin g filler | Mater ial | Conten t in the silicon-contain ing filler | Performa nce 1 (Bending strength/ MPa) | Performance 2 (1500 °C hot airflow impact for 30s) |
| Sampl e 7-1 | Furfural acetone resin | Silica aerogel powder and mica powder 1:3 | 1:3 | Talcu m powd er | 10 wt% | 73 | Unbroken |
| Sampl e 7-2 | Benzoxazi ne resin | Silica aerogel powder and mica powder 1:3 | 1:3 | Silica alumi na powd er | 10 wt% | 75 | Unbroken |
| Sampl e 7-3 | Benzoxazi ne resin | Silica aerogel powder and mica powder 1:3 | 1:3 | Kaoli n | 10 wt% | 74 | Unbroken |
| Sampl e 7-4 | Benzoxazi ne resin | Silica aerogel powder and mica powder 1:3 | 1:3 | Kaoli n | 20 wt% | 77 | Unbroken |
| Sampl e 7-5 | Benzoxazi ne resin | Silica aerogel powder and mica powder 1:3 | 1:3 | Silica alumi na powd er | 20 wt% | 78 | Unbroken |
| Sampl e 7-6 | Benzoxazi ne resin | Silica aerogel powder and mica powder 1:3 | 1:3 | Talcu m powd er | 20 wt% | 79 | Unbroken |
| Sampl e 7-7 | Benzoxazi ne resin | Silica aerogel powder and mica powder 1:3 | 1:3 | Silica alumi na powd er | 30 wt% | 82 | Unbroken |
| Sampl e 7-8 | Benzoxazi ne resin | Silica aerogel powder and mica powder 1:3 | 1:3 | Talcu m powd er | 30 wt% | 83 | Unbroken |
| Sampl e 7-9 | Benzoxazi ne resin | Silica aerogel powder and mica powder 1:3 | 1:3 | Kaoli n | 30 wt% | 83 | Unbroken |
| Sampl e 7-10 | Phenolic resin | Silica aerogel powder and mica powder 1:3 | 1:3 | Kaoli n | 40 wt% | 84 | Unbroken |
| Sampl e 7-11 | Benzoxazi ne resin | Silica aerogel powder and mica powder 1:3 | 1:3 | Kaoli n | 40 wt% | 87 | Unbroken |
| Sampl e 7-12 | Benzoxazi ne resin | Silica aerogel powder and mica powder 1:3 | 1:3 | Silica alumi na powd er | 40 wt% | 88 | Unbroken |
| Sampl e 7-13 | Benzoxazi ne resin | Silica aerogel powder and mica powder 1:3 | 1:3 | Talcu m powd er | 40 wt% | 86 | Unbroken |

Through comparison of the samples 6-3 in Table 7 and Table 6, it can be seen that the bending strength of the heat-resistant protective member added with the high-temperature fusion agent is significantly reinforced.

### Embodiment 8

In this embodiment, a silicon-containing filler is evenly mixed with a lubricant, the silicon-containing filler and the lubricant are added to a resin and mixed evenly, then curing is performed, and curing conditions are the same as those in Embodiment 1. There is no heat-resistant fiber cloth. For a dosage of the lubricant, talcum powder accounts for 5 to 40 wt% of an amount of the silicon-containing filler, and paraffin and polyethylene wax account for 3 to 10 wt% of the amount of the silicon-containing filler. The paraffin and the polyethylene wax have low melting points, and affect impact resistance if having a large amount.

Raw material purchase is the same as that in Embodiment 5.

Ten samples are prepared in Embodiment 8, and are sample 8-1 to sample 8-10.

### Comparative Embodiment 8

A preparation method in Comparative embodiment 8 of this application is basically the same as that in Embodiment 8. Three comparative samples are prepared in this application, namely, comparative sample 8-A, comparative sample 8-B, and comparative sample 8-C.

Test results are shown in Table 8. A content of the lubricant in the silicon-containing filler refers to a mass ratio of the lubricant to the silicon-containing filler. A ratio of a resin to a silicon-containing filler is a mass ratio.

**Table 8: Performance test results of heat-resistant protective members prepared in Embodiment 8 and Comparative embodiment 8 of this application**

| | Resin | Silicon-containing filler | | Lubricant | | Performance testing | |
|---|---|---|---|---|---|---|---|
| | Material | Material | Ratio of a resin to a silicon-containing filler | Material | Content in the silicon-containi ng filler | Performa nce 1 (Bending strength/ MPa) | Performance 2 (1500 °C hot airflow impact for 30s) |
| Sample 8-1 | Benzoxazine: phenolic resin = 4:1 | Silica aerogel powder and mica powder 1:3 | 1:3 | Paraffin | 3 wt% | 76 | Unbroken |
| Sample 8-2 | Benzoxazine resin | Silica aerogel powder and mica powder 1:3 | 1:3 | Paraffin | 5 wt% | 78 | Unbroken |
| Sample 8-3 | Benzoxazine resin | Silica aerogel powder and mica powder 1:3 | 1:3 | Polyeth ylene wax | 10 wt% | 83 | Unbroken |
| Compa rative sample 8-A | Benzoxazine resin | Ceramic micro powder | 1:3 | Paraffin | 15 wt% | 84 | Broken |
| Compa rative sample 8-B | Benzoxazine resin | Quartz powder | 1:3 | Polyeth ylene wax | 15 wt% | 81 | Broken |
| Sample 8-4 | Benzoxazine resin | Ceramic micro powder | 1:3 | Talcum powder | 5 wt% | 73 | Unbroken |
| Sample 8-5 | Benzoxazine resin | Silica aerogel powder and mica powder 1:3 | 1:3 | Talcum powder | 10 wt% | 77 | Unbroken |
| Sample 8-6 | Benzoxazine resin | Silica aerogel powder and mica powder 1:3 | 1:3 | Talcum powder | 20 wt% | 79 | Unbroken |
| Sample 8-7 | Benzoxazine resin | Wollastonite | 1:3 | Talcum powder | 20 wt% | 85 | Unbroken |
| Sample 8-8 | Benzoxazine resin | Silica aerogel powder and mica powder 1:3 | 1:3 | Talcum powder | 30 wt% | 83 | Unbroken |
| Sample 8-9 | Benzoxazine resin | Silica aerogel powder and mica powder 1:3 | 1:3 | Talcum powder | 40 wt% | 86 | Unbroken |
| Sample 8-10 | Phenolic resin | Ceramic micro powder | 1:3 | Talcum powder | 40 wt% | 78 | Unbroken |
| Compa rative sample 8-C | Benzoxazine resin | Silica aerogel powder and mica powder 1:3 | 1:3 | Talcum powder | 45 wt% | 73 | Broken |

Through comparison of the samples 8-2 and 8-3in Table 8 and the sample 6-3 in Table 6, it can be seen that the bending strength of the heat-resistant protective member added with the lubricant is significantly reinforced.

### Embodiment 9

In this embodiment, a silicon-containing filler is evenly mixed with a lubricant, the silicon-containing filler and the lubricant are added to a resin and mixed evenly, then curing is performed, and curing conditions are the same as those in Embodiment 2. There is no heat-resistant fiber cloth. For a dosage of the lubricant, talcum powder accounts for 5 to 40 wt% of an amount of the silicon-containing filler, and paraffin and polyethylene wax accounts for 3 to 10 wt% of the amount of the silicon-containing filler. The paraffin and the polyethylene wax have low melting points, and affect impact resistance if having a large amount.

Raw material purchase is the same as that in Embodiment 2 and Embodiment 3.

Twenty-eight samples are prepared in Embodiment 9, and are sample 9-1 to sample 9-28.

### Comparative Embodiment 9

A preparation method in Comparative embodiment 9 of this application is basically the same as that in Embodiment 9. Comparative sample 9-A is prepared in this application.

Test results are shown in Table 9. A ceramic precursor slurry content is a ratio of mass of a ceramic precursor slurry to a sum of the mass of the ceramic precursor slurry and mass of a resin, and a ratio of a resin and a silicon-containing filler is a mass ratio.

**Table 9: Performance test results of heat-resistant protective members prepared in Embodiment 9 of this application**

| | Resin | Silicon-containing filler | | Ceramic precursor slurry | | Performance testing | |
|---|---|---|---|---|---|---|---|
| | Material | Material | Ratio of a resin to a silicon-containin g filler | Materi al | Ceramic precursor slurry content | Performan ce 1 (Bending strength/ MPa) | Performance 2 (1500 °C hot airflow impact for 50s) |
| Sample 9-1 | Phenolic resin | Silica aerogel powder and mica powder 1:3 | 1:3 | Polysi lazane resin | 50% | 41 | Unbroken |
| Sample 9-2 | Benzoxazine resin | Silica aerogel powder and mica powder 1:3 | 1:3 | Polysi lazane resin | 50% | 44 | Unbroken |
| Sample 9-3 | Benzoxazine resin: phenolic resin = 4:1 | Silica aerogel powder and mica powder 1:3 | 1:3 | Polysi lazane resin | 50% | 41 | Unbroken |
| Sample 9-4 | Benzoxazine resin: phenolic resin = 4:1 | Silica aerogel powder and mica powder 1:3 | 1:3 | Polysi lazane resin | 40% | 42 | Unbroken |
| Sample 9-5 | Benzoxazine resin | Silica aerogel powder and mica powder 1:3 | 1:3 | Polysi lazane resin | 40% | 45 | Unbroken |
| Sample 9-6 | Phenolic resin | Silica aerogel powder and mica powder 1:3 | 1:3 | Polysi lazane resin | 40% | 42 | Unbroken |
| Sample 9-7 | Benzoxazine resin: phenolic resin = 4:1 | Silica aerogel powder and mica powder 1:3 | 1:3 | Polysi lazane resin | 30% | 44 | Unbroken |
| Sample 9-8 | Benzoxazine resin | Silica aerogel powder and mica powder 1:3 | 1:3 | Polysi lazane resin | 30% | 47 | Unbroken |
| Sample 9-9 | Phenolic resin | Silica aerogel powder and mica powder 1:3 | 1:3 | Polysi lazane resin | 30% | 43 | Unbroken |
| Sample 9-10 | Benzoxazine: phenolic resin = 4:1 | Silica aerogel powder and mica powder 1:3 | 1:3 | Polysi lazane resin | 20% | 50 | Unbroken |
| Sample 9-11 | Phenolic resin | Silica aerogel powder and mica powder 1:3 | 1:3 | Polysi lazane resin | 20% | 47 | Unbroken |
| Sample 9-12 | Benzoxazine resin | Silica aerogel powder and mica powder 1:3 | 1:3 | Polysi lazane resin | 20% | 53 | Unbroken |
| Sample 9-13 | Benzoxazine resin | Silica aerogel powder and mica powder 1:3 | 1:3 | Polysi lazane resin | 10% | 58 | Unbroken |
| Sample 9-14 | Benzoxazine: phenolic resin = 4:1 | Silica aerogel powder and mica powder 1:3 | 1:3 | Polysi lazane resin | 10% | 54 | Unbroken |
| Sample 9-15 | Phenolic resin | Silica aerogel powder and mica powder 1:3 | 1:3 | Polysi lazane resin | 10% | 51 | Unbroken |
| Sample 9-16 | Benzoxazine resin | Mica powder | 1:3 | Polysi lazane resin | 5% | 60 | Unbroken |
| Sample 9-17 | Benzoxazine: phenolic resin = 4:1 | Silica aerogel powder and mica powder 1:3 | 1:3 | Polysi lazane resin | 5% | 55 | Unbroken |
| Sample 9-18 | Phenolic resin | Silica aerogel powder and mica powder 1:3 | 1:3 | Polysi lazane resin | 5% | 53 | Unbroken |
| Sample 9-19 | Benzoxazine resin | Silica aerogel powder and mica powder 1:3 | 1:3 | Polysi lazane resin | 5% | 59 | Unbroken |
| Sample 9-20 | Phenolic resin | Silica aerogel powder and mica powder 1:3 | 1:3 | Polyb orosila zane resin | 50% | 42 | Unbroken |
| Sample 9-21 | Benzoxazine resin | Silica aerogel powder and mica powder 1:3 | 1:3 | Polyb orosila zane resin | 50% | 45 | Unbroken |
| Sample 9-22 | Benzoxazine resin | Silica aerogel powder and mica powder 1:3 | 1:3 | Polyb orosila zane resin | 40% | 41 | Unbroken |
| Sample 9-23 | Furfural acetone resin | Silica aerogel powder and mica powder 1:3 | 1:3 | Polyb orosila zane resin | 30% | 47 | Unbroken |
| Sample 9-24 | Benzoxazine resin | Silica aerogel powder and mica powder 1:3 | 1:3 | Polyb orosila zane resin | 20% | 51 | Unbroken |
| Sample 9-25 | Benzoxazine resin | Silica aerogel powder and mica powder 1:3 | 1:3 | Polyb orosila zane resin | 10% | 59 | Unbroken |
| Sample 9-26 | Benzoxazine resin | Silica aerogel powder and mica powder 1:3 | 1:3 | Polyb orosila zane resin | 5% | 61 | Unbroken |
| Sample 9-27 | Furfural acetone resin | Mica powder | 1:3 | Polyb orosila zane resin | 20% | 58 | Unbroken |
| Sample 9-28 | Furfural acetone resin | Mica powder | 1:3 | Polysi lazane resin | 20% | 56 | Unbroken |
| Compara tive sample 9-A | Phenolic resin | Silica aerogel powder and mica powder 1:3 | 1:3 | Null | | 58 | Broken |

It can be seen from Table 6 and Table 9 above that, the heat-resistant protective member with a ceramic precursor has reinforced thermal impact resistance performance, can be unbroken under 1500 °C hot airflow impact for 50s, and can withstand thermal impact for a longer time period than the heat-resistant protective member without a ceramic precursor.

### Embodiment 10

In this embodiment, a resin, a silicon-containing filler, and a chopped fiber are mixed in proportion, and the silicon-containing filler and the chopped fiber can be premixed and then added, or can be added separately in stages. An order of addition is not limited. Curing is performed after even mixing, and curing conditions are the same as those in Embodiment 1.

The chopped carbon fiber used in this embodiment is purchased from Jiangxi Shuobang New Material Technology Co., Ltd., the chopped silicon carbide fiber is purchased from Hunan Zerafber New Material Co., Ltd., and purchase of other materials is the same as that in Embodiment 6.

Eight samples are prepared in Embodiment 10, and are sample 10-1 to sample 10-8.

### Comparative Embodiment 10

A preparation method in Comparative embodiment 10 of this application is basically the same as that in Embodiment 10. Three comparative samples are prepared in this application, namely, comparative sample 10-A and comparative sample 10-C.

Test results are shown in Table 10. A ratio of a resin to a silicon-containing filler is a mass ratio.

**Table 10: Performance test results of heat-resistant protective members prepared in Embodiment 10 of this application**

| | Resin | Silicon-containing filler | | Chopped fiber | | Performance testing | |
|---|---|---|---|---|---|---|---|
| | Material | Material | Ratio of a resin to a silicon-containing filler | Material | Mass ratio of the chopped fiber to the | Performance 1 (Bending strength/MPa) | Performance 2 (1500 °C hot airflow impact for 30s) |
| | | | | | silicon-containing filler | | |
| Comparative sample 10-A | Phenolic resin | Silica aerogel powder and mica powder 1:3 | 1:3 | Null | | 58 | Unbroken |
| Comparative sample 10-B | Benzoxazine resin | Silica aerogel powder and mica powder 1:3 | 1:3 | Null | | 69 | Unbroken |
| Sample 10-1 | Benzoxazine resin | Silica aerogel powder and mica powder 1:3 | 1:3 | Short carbon fiber | 0.5% | 70 | Unbroken |
| Sample 10-2 | Benzoxazine resin | Silica aerogel powder and mica powder 1:3 | 1:3 | Short carbon fiber | 1% | 71 | Unbroken |
| Sample 10-3 | Benzoxazine resin | Silica aerogel powder and mica powder 1:3 | 1:3 | Short carbon fiber | 3% | 73 | Unbroken |
| Sample 10-4 | Benzoxazine resin | Silica aerogel powder and mica powder 1:3 | 1:3 | Short carbon fiber | 5% | 79 | Unbroken |
| Sample 10-5 | Benzoxazine resin | Silica aerogel powder and mica powder 1:3 | 1:3 | Short carbon fiber | 10% | 73 | Unbroken |
| Sample 10-6 | Benzoxazine resin | Silica aerogel powder and mica powder 1:3 | 1:3 | Short carbon fiber | 15% | 68 | Unbroken |
| Comparative sample 10-C | Benzoxazine resin | Silica aerogel powder and mica powder 1:3 | 1:3 | Short carbon fiber | 20% | 62 | Broken |
| Sample 10-7 | Phenolic resin | Mica powder | 1:3 | Silicon carbide fiber | 10% | 71 | Unbroken |
| Sample 10-8 | Benzoxazine resin | Silica aerogel powder and mica powder 1:3 | 1:3 | Aluminum silicate fiber | 10% | 74 | Unbroken |

It can be seen from Table 10 that, the bending strength of the heat-resistant protective member appropriately added with the chopped fiber increases, but if a content of the chopped fiber is too high, for example, when the mass ratio of the chopped fiber to the silicon-containing filler is greater than 15%, the bending strength of the heat-resistant protective member decreases. Reasons may be as follows: the chopped fiber should not be dispersed and are prone to agglomeration, and a lapping point of the chopped fiber may be a weak point during thermal impact.

### Embodiment 11

In this embodiment, a functional layer is prepared according to the method in Embodiment 10, a reinforcing layer is prepared according to the method in Embodiment 1 or pure fiber cloth is adopted as a reinforcing layer, and then the functional layer and the reinforcing layer are hot-pressed and compounded.

Purchase sources of raw materials are the same as those in Embodiment 1 and Embodiment 6.

Five samples are prepared in Embodiment 11, and are sample 11-1 to sample 11-5.

Test results are shown in Table 11.

**Table 11: Performance test results of heat-resistant protective members prepared in Embodiment 11 of this application**

| | Functional layer (with a mass ratio of a resin to a silicon-containing filler as 1:3, and a mass ratio of a chopped fiber to the silicon-containing filler as 1:10) | | | Reinforcing layer (Resin+fiber cloth, or pure fiber cloth) | Performance testing |
|---|---|---|---|---|---|
| | Resin | Silicon-containing filler | Chopped fiber | | Performance 2 (1500 °C hot airflow impact for 30s) |
| Sample 11-1 | Benzoxazine resin | Silica aerogel powder and mica powder 1:3 | None | Phenolic resin+high silica fiber cloth | Unbroken |
| Sample 11-2 | Benzoxazine resin | Silica aerogel powder and mica powder 1:3 | Short carbon fiber | Phenolic resin+high silica fiber cloth | Unbroken |
| Sample 11-3 | Benzoxazine resin | Silica aerogel powder and mica powder 1:3 | Short carbon fiber | Benzoxazine resin+high silica fiber cloth | Unbroken |
| Sample 11-4 | Benzoxazine resin | Mica powder | Short carbon fiber | Phenolic resin+high silica fiber cloth | Unbroken |
| Sample 11-5 | Benzoxazine resin: phenolic resin = 4:1 | Silica aerogel powder and mica powder 1:3 | Short carbon fiber | Pure high silica fiber cloth (where a resin of the functional layer is impregnated into the reinforcing layer during hot pressing) | Unbroken |

### Embodiment 12

In this embodiment, a functional layer is prepared according to the method in Embodiment 10, a reinforcing layer/strengthening layer is prepared according to the method in Embodiment 1 or pure fiber cloth is adopted as a reinforcing layer/strengthening layer, then the functional layer is sandwiched between the strengthening layer and the reinforcing layer, and hot-pressing and compounding are performed.

Purchase sources of raw materials are the same as those in Embodiment 1 and Embodiment 6.

Six samples are prepared in Embodiment 12, and are sample 12-1 to sample 12-6.

Test results are shown in Table 12.

**Table 12: Performance test results of heat-resistant protective members prepared in Embodiment 12 of this application**

| | Strengthening layer (Resin+fiber cloth, or pure fiber cloth) | Functional layer | Reinforcing layer (Resin+fiber cloth, or pure fiber cloth) | Performance testing | |
|---|---|---|---|---|---|
| | | | | Performance 1 (Bending strength/MPa) | Performance 2 (1500 °C hot airflow impact for 30) |
| Sample 12-1 | Benzoxazine resin+high silica fiber cloth | Benzoxazine resin+silicon-containing filler (aerogel powder and mica powder 1:3)+short carbon fiber (with a ratio as the ratio according to Table 15) | Benzoxazine resin+high silica fiber cloth | 99 | Unbroken |
| Sample 12-2 | Benzoxazine resin+quartz fiber cloth | Benzoxazine resin+silicon-containing filler (aerogel powder and mica powder 1:3)+short carbon fiber (with a ratio as the ratio according to Table 15) | Benzoxazine resin+high silica fiber cloth | 107 | Unbroken |
| Sample 12-3 | Pure high silica fiber cloth (where a resin of the functional layer is impregnated into the reinforcing layer during hot pressing) | Benzoxazine resin+silicon-containing filler (aerogel powder and mica powder 1:3)+short carbon fiber (with a ratio as the ratio according to Table 15) | Pure high silica fiber cloth (where a resin of the functional layer is impregnated into the reinforcing layer during hot pressing) | 96 | Unbroken |
| Sample 12-4 | Pure quartz fiber (where a resin of the functional layer is impregnated into the reinforcing layer during hot pressing) | Phenolic resin+silicon-containing filler (aerogel powder and mica powder 1:3)+short carbon fiber (with a ratio as the ratio according to Table 15) | Pure high silica fiber cloth (where a resin of the functional layer is impregnated into the reinforcing layer during hot pressing) | 109 | Unbroken |
| Sample 12-5 | Benzoxazine resin+fiberglass cloth | Benzoxazine resin: phenolic resin 4:1+silicon-containing filler (aerogel powder and mica powder 1:3)+short carbon fiber (with a ratio as the ratio according to Table 15) resin | Benzoxazine resin+high silica fiber cloth | 106 | Unbroken |
| Sample 12-6 | Pure fiberglass cloth (where a resin of the functional layer is impregnated into the reinforcing layer during hot pressing) | Benzoxazine resin+silicon-containing filler (aerogel powder and mica powder 1:3)+short carbon fiber (with a ratio as the ratio according to Table 15) | Phenolic resin+high silica fiber cloth | 105 | Unbroken |

Various technical features of the foregoing embodiments may be combined arbitrarily, and all possible combinations of the various technical features of the foregoing embodiments have not been described for the sake of concise description; however, as long as there is no conflict in the combinations of these technical features, they shall all be regarded as falling within the scope of this specification.

The foregoing embodiments merely describe several implementations of this application. The description is relatively detailed, but constitutes no limitation on the patent scope of this application. It is hereby noted that several variations and improvements, which may be made to the embodiments by a person of ordinary skill in the art without departing from the concept of this application, fall within the protection scope of this application. Therefore, the patent protection scope of this application should be subject to the attached claims.

## Claims

1. A heat-resistant protective member, **characterized by** comprising a functional layer, the functional layer comprising a first resin and a filler dispersed in the first resin.

2. The heat-resistant protective member according to claim 1, **characterized in that** a mass content of a carbon element in the first resin is greater than 40%;
the filler is a chopped fiber, a volume proportion of the chopped fiber in the functional layer is 50% to 80%, and the chopped fiber comprises one or more of a carbon fiber, a silicon carbide fiber, a silicon nitride fiber, a quartz fiber, an aluminum silicate fiber, an asbestos fiber, a high silica fiber, a boro-carbon fiber, and a carbon nanotube; or
the filler is a first heat-reflective filler, and a volume percent of the first heat-reflective filler in the functional layer is 45% to 75%; and the first heat-reflective filler includes one or more of oxides or nitrides of titanium, iron, aluminum, zinc, lanthanum, and cerium.

3. The heat-resistant protective member according to claim 1, **characterized in that** a mass content of a carbon element in the first resin is greater than 40%, the filler comprises a first silicon-containing filler, and a weight ratio of the first resin to the first silicon-containing filler is 1:3 to 1:1.

4. The heat-resistant protective member according to claim 3, **characterized in that** the first silicon-containing filler comprises one or a combination of more of silica aerogel powder, quartz powder, mica powder, ceramic micro powder, white carbon black, wollastonite, montmorillonite, and talcum powder.

5. The heat-resistant protective member according to claim 3, **characterized in that** the first silicon-containing filler comprises silica aerogel powder and mica powder, and a mass ratio of the silica aerogel powder to the mica powder is 1:3 to 1:1.

6. The heat-resistant protective member according to claim 3, **characterized in that** the first silicon-containing filler comprises silicon dioxide and aluminum oxide; and a dosage of the silicon dioxide is 50 to 80 wt% of the first silicon-containing filler, and a dosage of the aluminum oxide is 10 to 30 wt% of the first silicon-containing filler.

7. The heat-resistant protective member according to claim 3, **characterized in that** the filler further comprises a first high-temperature fusion agent, and a dosage of the first high-temperature fusion agent is 10 wt% to 40 wt% of the first silicone-containing filler.

8. The heat-resistant protective member according to claim 7, **characterized in that** the first high-temperature fusion agent comprises one or more of talcum powder, wollastonite, mica powder, kaolin, barium sulfate, and silica-alumina powder; and a material of the first high-temperature fusion agent is different from a material of the first silicon-containing filler.

9. The heat-resistant protective member according to claim 3, **characterized in that** the filler further comprises a first lubricant, and a dosage of the first lubricant is 10 wt% to 40 wt% of the first silicon-containing filler.

10. The heat-resistant protective member according to claim 3, **characterized in that** the functional layer further comprises a first ceramic precursor, a ratio of a volume of the first ceramic precursor to a sum of volumes of the first ceramic precursor and the first resin is less than 50%, or a ratio of mass of the first ceramic precursor to a sum of the mass of the first ceramic precursor and mass of the first resin is less than 50%.

11. The heat-resistant protective member according to claim 10, **characterized in that** the first ceramic precursor comprises one or more of a polysilazane resin, a polyborosilazane resin, and a polycarbosilane resin.

12. The heat-resistant protective member according to claim 3, **characterized in that** the filler further comprises a chopped fiber, and a dosage of the chopped fiber is 0 to 15 wt% of the first silicon-containing filler.

13. The heat-resistant protective member according to claim 12, **characterized in that** the chopped fiber comprises one or more of a carbon fiber, a silicon carbide fiber, a silicon nitride fiber, a quartz fiber, an aluminum silicate fiber, an asbestos fiber, a high silica fiber, a boro-carbon fiber, and a carbon nanotube, and the chopped fiber has a length of 0.05 to 30 mm and a diameter of 1 to 15 µm.

14. The heat-resistant protective member according to claim 3, **characterized in that** the filler further comprises a first heat-reflective filler, and a dosage of the first heat-reflective filler is 0 to 5 wt% of the first silicon-containing filler.

15. The heat-resistant protective member according to claim 14, **characterized in that** the first heat-reflective filler comprises one or more of oxides or nitrides of titanium, iron, aluminum, zinc, lanthanum, and cerium.

16. The heat-resistant protective member according to any one of claims 1-15, **characterized in that** the heat-resistant protective member further comprises a reinforcing layer stacked with the functional layer, and a thickness ratio of the functional layer to the reinforcing layer is (8-10) : (1-4).

17. The heat-resistant protective member according to claim 16, **characterized in that** the reinforcing layer is a fiber matrix; or the reinforcing layer comprises a fiber matrix and a second resin, and the second resin is dispersed in pores of the fiber matrix and/or on a surface of the fiber matrix to form a compound layer.

18. The heat-resistant protective member according to claim 17, **characterized in that** when the reinforcing layer comprises the fiber matrix and the second resin, a mass content of a carbon element in the second resin is greater than 40%; the fiber matrix comprises fiber cloth and/or fiber felt; and a fiber of the fiber matrix comprises one or more of a carbon fiber, a silicon carbide fiber, a silicon nitride fiber, a quartz fiber, an aluminum silicate fiber, an asbestos fiber, a high silica fiber, a boro-carbon fiber, and a carbon nanotube.

19. The heat-resistant protective member according to claim 1 or 3 or 17, **characterized in that** the first resin comprises one or a combination of more of a phenolic resin, a furfural acetone resin, a benzoxazine resin, a furan resin, polyurea, and a phenolic modified epoxy resin; and/or, the second resin comprises one or a combination of more of a phenolic resin, a furfural acetone resin, a benzoxazine resin, a furan resin, polyurea, and a phenolic modified epoxy resin.

20. The heat-resistant protective member according to claim 1 or 3 or 17, **characterized in that** a first viscosity regulator is dispersed in the first resin, and a dosage of the first viscosity regulator is 1% to 10% of a volume of the first resin; and/or,
a first curing agent is dispersed in the first resin; and/or
a first flame retardant is dispersed in the first resin, and a dosage of the first flame retardant is 5% to 40% of mass of the first resin; and/or,
a second viscosity regulator is dispersed in the second resin, and a dosage of the second viscosity regulator is 1% to 10% of a volume of the second resin; and/or
a second curing agent is dispersed in the second resin; and/or
a second flame retardant is dispersed in the second resin, and a dosage of the second flame retardant is 5% to 40% of mass of the second resin.

21. The heat-resistant protective member according to claim 17, **characterized in that** the reinforcing layer comprises the fiber matrix and the second resin; and a phase-change material is further dispersed in the second resin, and a dosage of the phase-change material is 5% to 20% of a volume of the fiber matrix.

22. The heat-resistant protective member according to claim 17, **characterized in that** the fiber matrix comprises fiber cloth; and the fiber cloth is one or more of a fiber twill fabric, a fiber satin fabric, a fiber uniaxial fabric and a fiber multi-axial fabric.

23. The heat-resistant protective member according to claim 17, **characterized in that** the reinforcing layer comprises the fiber matrix and the second resin; and the reinforcing layer further comprises a second ceramic precursor, a ratio of a volume of the second ceramic precursor to a sum of volumes of the second ceramic precursor and the second resin is less than 50%, or a ratio of mass of the second ceramic precursor to a sum of the mass of the second ceramic precursor and mass of the second resin is less than 50%.

24. The heat-resistant protective member according to claim 23, **characterized in that** the second ceramic precursor comprises one or more of a polysilazane resin, and a polyborosilazane resin.

25. The heat-resistant protective member according to claim 23, **characterized in that** the fiber matrix comprises a first fiber matrix and a second fiber matrix; the second resin is dispersed in pores of the first fiber matrix and/or covers two opposite surfaces of the first fiber matrix to form first compound layers; the second ceramic precursor is dispersed in pores of the second fiber matrix and/or covers two opposite surfaces of the second fiber matrix to form second compound layers; wherein,
the first compound layers and the second compound layers are stacked to form a stacked structure; or
two first compound layers clamp at least one second compound layer to form a stacked structure; or
two second compound layers clamp at least one first compound layer to form a stacked structure.

26. The heat-resistant protective member according to claim 23, **characterized in that** a mixture of the second resin and the second ceramic precursor is dispersed in the pores of the fiber matrix and/or covers two opposite surfaces of the fiber matrix.

27. The heat-resistant protective member according to claim 23, **characterized in that** the second ceramic precursor is coated on one surface of the compound layer or coated on two opposite surfaces of the compound layer.

28. The heat-resistant protective member according to claim 17, **characterized in that** the reinforcing layer comprises the fiber matrix and the second resin; and the reinforcing layer further comprises a second silicon-containing filler, and the second silicon-containing filler accounts for 40% to 70% of a volume of the fiber matrix.

29. The heat-resistant protective member according to claim 28, **characterized in that** the second silicon-containing filler comprises one or a combination of more of silica aerogel powder, quartz powder, mica powder, ceramic micro powder, white carbon black, wollastonite, montmorillonite, and talcum powder.

30. The heat-resistant protective member according to claim 28, **characterized in that** the second silicon-containing filler comprises silica aerogel powder and mica powder, and a mass ratio of the silica aerogel powder to the mica powder is 1:3 to 1:1.

31. The heat-resistant protective member according to claim 28, **characterized in that** the second silicon-containing filler comprises silicon dioxide and aluminum oxide; and a dosage of the silicon dioxide is 50% to 80 wt% of the second silicon-containing filler, and a dosage of the aluminum oxide is 10% to 30 wt% of the second silicon-containing filler.

32. The heat-resistant protective member according to claim 28, **characterized in that** the second silicon-containing filler is coated on a surface of the compound layer or embedded into the second resin.

33. The heat-resistant protective member according to claim 28, **characterized in that** the reinforcing layer further comprises a second high-temperature fusion agent, and a dosage of the second high-temperature fusion agent is 10 wt% to 40 wt% of the second silicone-containing filler.

34. The heat-resistant protective member according to claim 33, **characterized in that** the second high-temperature fusion agent comprises one or more of talcum powder, wollastonite, mica powder, kaolin, barium sulfate, and silica-alumina powder; and a material of the second high-temperature fusion agent is different from a material of the second silicon-containing filler.

35. The heat-resistant protective member according to claim 28, **characterized in that** the reinforcing layer further comprises a second lubricant, and a dosage of the second lubricant is 10 to 40 wt% of the second silicone-containing filler.

36. The heat-resistant protective member according to claim 35, **characterized in that** the second lubricant comprises one or a combination of more of polyamide wax, polyethylene wax and paraffin.

37. The heat-resistant protective member according to claim 28, **characterized in that** the reinforcing layer further comprises a second heat-reflective filler, and the second heat-reflective filler is 5 to 30 wt% of the second silicone-containing filler.

38. The heat-resistant protective member according to claim 37, **characterized in that** the second heat-reflective filler comprises one or more of oxides or nitrides of titanium, iron, aluminum, zinc, lanthanum, and cerium.

39. The heat-resistant protective member according to claim 17, **characterized in that** the reinforcing layer comprises the fiber matrix and the second resin; and the reinforcing layer further comprises a colorant, and the colorant comprises one or more of carbon black, titanium white, iron black, oil-based color concentrate, and transition metal coloring ionic oxides.

40. The heat-resistant protective member according to claim 16, **characterized in that** the heat-resistant protective member further comprises a gas absorbent; and the gas absorbent is filled in the functional layer and/or the reinforcing layer, or the gas absorbent is disposed between the functional layer and the reinforcing layer to form a gas absorbent layer.

41. The heat-resistant protective member according to claim 16, **characterized in that** the heat-resistant protective member further comprises a heat insulation layer, and the heat insulation layer is disposed on a side of the functional layer away from the reinforcing layer.

42. The heat-resistant protective member according to claim 41, **characterized in that** the heat insulation layer comprises an aerogel coating or aerogel felt.

43. A battery, **characterized by** comprising the heat-resistant protective member according to any one of claims 1 to 42.

44. The battery according to claim 43, **characterized by** comprising:
a battery cell, where a first wall of the battery cell is provided with a pressure relief structure; and
the heat-resistant protective member is arranged opposite to the pressure relief structure.

45. The battery according to claim 43, **characterized by** comprising:
a plurality of battery cells, where the plurality of battery cells include a first battery cell and a second battery cell that are adjacent, and the first battery cell and the second battery cell are arranged along a first direction; and
the heat-resistant protective member is arranged between the first battery cell and the second battery cell.
